# FASCICULE DE BREVET EUROPEEN

(11) **EP 3 022 155 B1**
(45) Date de publication et mention de la délivrance du brevet: **27.12.2017**
(21) Numéro de dépôt: 14741604.4
(22) Date de dépôt: 18.07.2014
(51) Int. Cl.: C01G 3/00, C09D 5/10, C09D 5/14, C09D 5/16

(54) **REVETEMENTS COMPOSITES DE CUIVRE OXYDE ET/OU PHOSPHORE**
VERBUNDBESCHICHTUNGEN AUS OXYDIERTEM UND/ODER PHOSPHORHALTIGEM KUPFER
COMPOSITE COATINGS OF OXIDIZED AND/OR PHOSPHOROUS COPPER

(30) Priorité: 18.07.2013 FR 1357099; 28.03.2014 FR 1400766
(43) Date de publication de la demande: 25.05.2016
(73) Titulaire: Meto&Co, 34540 Balaruc-les-Bains (FR)
(72) Inventeur: PENARI, Stéphane, F-34540 Balaruc-les-Bains (FR)
(74) Mandataire: Regimbeau
(86) Numéro de dépôt international: PCT/EP2014/065498
(87) Numéro de publication internationale: WO 2015/007883

(56) Documents cités:
- WO-A1-00/04908
- WO-A1-94/26422
- US-A- 2 420 540
- Metal material and Co., Ltd Changsha day long: "Phosphor powder (CuP8)", , 18 mars 2012 (2012-03-18), XP002721025, Extrait de l'Internet: URL:http://titd007.en.b2b168.com/shop/supp ly/22501212.html [extrait le 2014-02-28]

## Description

L'objet de la présente invention concerne un revêtement synthétique contenant du cuivre oxydé et/ou phosphoré, le procédé d'obtention du revêtement, les utilisations dudit revêtement. En outre, la présente invention concerne une poudre de cuivre oxydée et/ou phosphorée permettant d'obtenir le revêtement d'intérêt, son procédé de fabrication et ses utilisations.

### INTRODUCTION

A l'aube des années 80, une nouvelle technique apparut et révolutionna la façon dont le monde travaille le métal.

Cette technique, qui consiste schématiquement à associer du métal et un liant, permet de recouvrir rapidement quasiment n'importe quel support, quelle qu'en soit la forme ou la nature (stratifiés, mélaminés, bois, plastiques, plâtre, fibre de verre, céramique, béton, mousses, porcelaine, verre et métal), en en épousant tous les détails.

Ce véritable matériau composite est disponible aujourd'hui en plusieurs variétés qui permettent de résoudre les nombreux problèmes de mise en oeuvre du métal massif.

Ainsi, des objets qui seraient trop lourds à réaliser en métal massif, trop chers, ou impliquant des techniques trop contraignantes pour réaliser des détails fins, peuvent être métallisés très rapidement et ne représenter qu'une fraction de poids et du prix.

Ainsi, la technologie de métallisation à froid se fait au moyen d'un équipement de peinture au pistolet conventionnel. Les métaux composites sont pulvérisés à froid au moyen d'un pistolet HVLP (haut volume / basse pression) avec des buses adaptées.

Chaque composite est formé de granulats micronisés de métal, d'un liant polymère hybride et d'un catalyseur. Le métal et le liant polymère interagissent dans une réaction chimique créant un composite extrêmement stable et homogène. Après catalyse, le polymère et le métal se lient chimiquement en produisant une adhérence très forte entre le composite ainsi formé et le support.

Le composite s'applique tant aux métaux et alliages « rouges » que « gris » : le cuivre (composé à 99% de cuivre pur) et ses alliages tels que le bronze (composé en très grande majorité de cuivre allié à l'étain), le laiton (alliage principalement de cuivre et zinc), le « nickel-silver » (Argentan - alliage de cuivre, nickel et zinc) ; ou le fer (composé de fer pur), l'aluminium (composé d'aluminium pur), le « X-Metal » (alliage de cuivre et d'étain à parts égales), l'inox (alliage principalement constitué de fer, de chrome et de nickel), le « canon de fusil » (alliage de cuivre, étain et argent), l'étain ou un composé d'étain et d'argent, etc.

Cette gamme s'enrichi régulièrement de nouveaux métaux.

Les métaux composites catalysés peuvent être poncés, sablés, polis, brossés, acidés, oxydés, gravés (si l'épaisseur l'autorise), vernis et traités exactement de la même façon que du métal massif.

Ce procédé permet l'application d'une fine couche de composite sur le support. Il n'y a pas de limitation quant à l'épaisseur. Le bon compromis économique est toutefois autour de 0,07 à 0,015 mm d'épaisseur, pouvant être obtenu en une seule couche.

Ces composites peuvent être appliqués sur des matériaux flexibles. De plus la couche de composite n'est pas conductrice d'électricité et ne corrode pas le support, ce qui l'en distingue du métal.

Récemment, la Demanderesse a montré que les composites de cuivre sont très bien adaptés pour les revêtements de type « antifouling » dans le domaine nautique (cf. par exemple article paru dans « Moteur Boat Magazine », n° 282 Juin 2013, page 133-137).

Les produits développés par la Demanderesse permettent de plus une diminution de la consommation et/ou un gain de vitesse de l'embarcation considérée.

En revanche la Demanderesse a constaté que de telles compositions avaient une couleur qui variait avec le temps, dû à l'oxydation du cuivre (couleur « vert de gris »).

Ceci oblige l'utilisateur à renouveler l'application du revêtement d'autant plus souvent ou tout simplement à choisir un autre agent antifouling sans cuivre. Ainsi la Demanderesse a d'abord développé une composition « anthracite » (ne faisant pas partie de la présente invention) permettant ainsi de camoufler la couleur de l'oxyde de cuivre mais qui ne convenait pas pour des questions d'ordre pratique (requérant un ponçage systématique après application).

Plusieurs solutions ont ensuite été trouvées par la Demanderesse afin d'obtenir une couleur satisfaisante qui perdure dans le temps.

Une première solution afin de stabiliser dans le temps la couleur du revêtement a été d'utiliser de la poudre de CuP₈ dans le composite servant à former le revêtement. CuP₈ est couramment utilisé dans des techniques de soudure. Toutefois, lorsque la poudre de CuP₈ est utilisée dans un composite selon la présente invention, les revêtements obtenus présentent en outre des caractéristiques esthétiques exceptionnelles (couleur anthracite) qui perdurent dans le temps. Ceci est particulièrement surprenant car CuP₈ à l'état de poudre est de couleur grise et c'est seulement lorsqu'il est incorporé dans le composite qu'il présente cette couleur noire anthracite qui ne présente pas en outre les effets néfastes esthétiquement de son oxydation superficielle.

Une solution complémentaire trouvée par la Demanderesse a été d'oxyder les granulats micronisés de cuivre avant leur incorporation dans le revêtement. Le revêtement obtenu conserve ses propriétés antifouling ainsi que ses propriétés liées à la diminution de la consommation et/ou un gain de vitesse de l'embarcation considérée, tout en présentant des caractéristiques esthétiques convenables. Il est donc surprenant qu'en faisant varier l'oxydation du cuivre ou la nature de la poudre (cuivre phosphoré tel que CuP₈), le revêtement garde ses propriétés au niveau nautique, alors que l'on aurait pu s'attendre à ce que ce soit l'inverse : il est nécessaire de remplacer les revêtements classiques au cuivre après une année/saison d'usage quand le cuivre (c'est-à-dire l'agent actif) est oxydé/modifié.

En outre dans les essais réalisés, l'oxydation du cuivre (et/ou de ses alliages) avant son incorporation dans le revêtement permet d'obtenir un revêtement d'un noir profond (plutôt esthétique) qui perdure dans le temps et permet ainsi de résoudre le problème technique initial relatif à la coloration du composite (pigmentation). Toutefois, la Demanderesse s'est aperçue que pour pouvoir réaliser de tels composites, il était nécessaire que la poudre de cuivre oxydée et/ou phosphorée (telle que CuP₈) ne soit pas trop fine, sinon le composite n'était pas réalisable. Ainsi, les poudres selon l'invention sont issues d'une mise au point tant au niveau du choix de leur nature chimique que de leur granulométrie.

Les poudre de cuivre phosphorées (tel que CuP₈), peuvent d'ailleurs également être oxydé de la même manière, ce qui change très légèrement la teinte finale du composite (les grains de la poudre étant oxydés à coeur et non superficiellement), mais leur permettent de gagner des propriétés physiques, chimiques et biologiques des poudres oxydées.

En effet, la Demanderesse s'est aperçue que les propriétés antimicrobiologiques des revêtements ainsi fabriqués semblent avoir été exacerbées en comparaison avec les revêtements de cuivre (par exemple non oxydés) précédents, permettant une application plus vaste encore. Cet effet supplémentaire inattendu vient complémenter l'invention initiale. Toutefois, afin de présenter de tels propriétés antimicrobiologiques, la Demanderesse s'est aperçue qu'une quantité minimale de cuivre était nécessaire dans le composite.

Certes, le cuivre est connu pour présenter des propriétés anti-microbiologiques intéressantes, comme cela a été rapporté par A.L. Casey et al. dans « Role of copper in reducing hospital environment contamination » ; J Hosp Infect (2009), doi :10.1016/j.jhin.2009.08.18, mais les revêtements de cuivre oxydés selon la présente invention présentent une cinétique de lyse microbiologique bien meilleure encore.

De plus, d'un point de vue technique il n'est pas toujours possible de réaliser tous les objets, en particulier hospitalier, en cuivre massif. Ajouté à cela, le cours financier des métaux varie, ce qui impact la faisabilité économique de tels objets (en cuivre massifs) en fonction du temps.

Ainsi, l'objet de la présente invention permet l'obtention facile d'objet biocides pouvant être incorporés dans la vie courante ou dans des milieux spécialisés tels que les domaines nautiques ou hospitaliers, par exemple tout en présentant un aspect esthétique (pigmentation) acceptable.

### RESUME DE L'INVENTION

L'objet de la présente invention concerne une composition de poudre de cuivre oxydé et/ou phosphoré, préférentiellement sous forme de CuP₈, caractérisée en ce que ladite poudre :
- contient au moins 60% en masse de cuivre,
- ne contient pas plus de 70% en masse de grains dont le diamètre est inférieur à 45µm au maximum.

L'objet de la présente invention concerne donc un procédé de fabrication d'une composition comme définie présentement, caractérisé en ce que le cuivre est oxydé à une température égale ou supérieure à 500 °C en présence d'oxygène et/ou d'une source d'oxygène, préférentiellement en présence de magnésium ou de phosphore.

L'objet de la présente invention concerne également l'utilisation d'une composition comme définie présentement en tant que biocide, préférentiellement pour prévenir les maladies nosocomiales ou en tant qu'agent antifouling.

L'objet de la présente invention concerne en outre l'utilisation d'une composition comme définie présentement pour ralentir ou empêcher la bio-corrosion d'un substrat préférentiellement par le revêtement dudit substrat par ladite composition.

L'objet de la présente invention concerne également l'utilisation d'une composition comme définie présentement pour pigmenter un composite.

L'objet de la présente invention concerne de plus un composite caractérisé en ce qu'il comprend une composition de poudre comme définie présentement, un agent liant et éventuellement un catalyseur de prise.

L'objet de la présente invention concerne donc un procédé de fabrication du composite comme défini présentement caractérisé en ce que la composition de poudre est mélangée à température ambiante avec le liant à l'état liquide, puis un catalyseur de prise est ajouté le cas échéant.

L'objet de la présente invention concerne également l'utilisation d'un composite comme défini présentement, pour le revêtement d'un substrat ou le moulage d'un substrat. L'objet de la présente invention concerne donc un procédé de fabrication d'un revêtement de surface caractérisé en ce que le composite comme défini présentement est pulvérisé sur la surface d'un substrat, ou que le substrat est trempé dans le composite à l'état liquide.

L'objet de la présente invention concerne en outre un revêtement de surface susceptible d'être obtenu par le procédé ci-dessus.

L'objet de la présente invention concerne de plus l'utilisation d'un revêtement de surface comme défini présentement en tant que biocide, préférentiellement pour éviter la bio-corrosion par exemple sur la carène d'un bateau.

### DEFINITIONS

### Antifouling

Un antifouling (ou peinture antifouling) ou peinture antisalissure est une peinture contenant des biocides destinée à empêcher les organismes aquatiques de se fixer sur la coque des navires ou sur d'autres objets immergés.

### Poudre

De manière générale, la poudre est un état fractionné de la matière. Il s'agit ainsi d'une pluralité d'unités (ou morceaux/granules) de matière(s) solide(s) de taille généralement inférieure au dixième de millimètre (100 µm) qui constituent ensemble une « collection ». Une poudre est caractérisée en termes de propriétés physiques par sa granulométrie.

### Poudre de cuivre oxydée

Par « poudre de cuivre oxydée », il est compris selon la présente invention d'une part que la poudre a les caractéristiques granulométriques définies présentement (permettant son incorporation dans un liant) et d'autre part que la poudre a une teneur en cuivre oxydé supérieure ou égale à 5% en masse de la masse totale de cuivre dans la poudre préférentiellement supérieure ou égale 10%, 20%, 30%, 40%, 50%, 60%, 70%, 80%, 90%, 95%, 99% ou 100% en masse de la masse totale de cuivre dans la poudre.

### Poudre de cuivre phosphorée

Par « poudre de cuivre phosphorée », il est compris selon la présente invention d'une part que la poudre a les caractéristiques granulométriques définies présentement (permettant son incorporation dans un liant) et d'autre part que la poudre a une teneur en phosphore comprise entre 2 et 16% en masse, préférablement 8%. De manière préférée, la poudre de cuivre phosphorée consiste en un alliage de cuivre et de phosphore, préférentiellement CuP₈, préférentiellement à une teneur en cuivre :phosphore en pourcentage en masse égale ou supérieure à 84 :16%, 85 : 15%, 86 :14%, 87 : 13%, 88 : 12%, 89 : 11%, 90 : 10%, 91 : 9%, 92 : 8%, 93 : 7%, 94 : 6%, 95 : 5%, 96 : 4%, 97 : 3%, 98 : 2%, 99 : 1%, plus préférentiellement supérieure ou égale de 92 : 8%. De manière préférée, la poudre comprenant du cuivre-phosphoré comprend comme élément majoritaire dans sa composition du CuP₈, ou consiste en du CuP₈, pouvant par exemple être compris à une teneur égale ou supérieure à 50%, 60%, 70%, 80%, 90%, 95%, 99% en masse totale de poudre.

### Granulométrie

La granulométrie est de manière générale l'étude de la distribution statistique des tailles d'une pluralité d'unités (ou morceaux/granules) solide(s) de matière naturelle ou fractionnée (c'est à dire une collection). L'analyse granulométrique est l'ensemble des opérations permettant de déterminer la distribution des tailles des éléments composant une poudre. La distribution granulométrique est la représentation sous forme de tables de nombres ou de graphiques des résultats expérimentaux de l'analyse granulométrique.

### Biocide

La définition du terme « biocide » selon la présente invention rejoint celle de la Directive du Parlement européen et du Conseil n° 98/8/CE du 16 février 1998 concernant la mise sur le marché des produits biocides (JOCE n° L 123 du 24 avril 1998) qui les définit comme étant « Les substances actives et les préparations contenant une ou plusieurs substances actives qui sont présentées sous la forme dans laquelle elles sont livrées à l'utilisateur, qui sont destinées à détruire, repousser ou rendre inoffensifs les organismes nuisibles, à en prévenir l'action ou à les combattre de toute autre manière, par une action chimique ou biologique ».

### Maladies nosocomiales

Le terme nosocomial vient du grec *nosos,* maladie et de *komein* soigner, qui forment le mot *nosokomeion,* hôpital. Une maladie nosocomiale est issue d'une infection nosocomiale, c'est-à-dire une infection contractée dans un établissement de santé. Une infection est dite nosocomiale ou hospitalière, si lors de l'admission du patient à l'hôpital, elle est absente et qu'elle se développe après l'admission, 48 heures au moins. Ce délai permet de distinguer une infection nosocomiale d'une infection d'acquisition communautaire. Le délai de 48 h s'allonge jusqu'à 30 jours dans le cas d'infections de site opératoire, et jusqu'à un an s'il y a mise en place de matériel prothétique. Autrement dit, toute infection survenant sur une cicatrice chirurgicale dans l'année suivant l'opération, même si le patient est sorti de l'hôpital, peut être considérée comme nosocomiale.

Par exemple, l'objet de la présente invention peut être actif et prévenir des pathologies dues à des bactéries Gram +, bactéries Gram -, bactéries anaérobies, virus ou même à des champignons.

Des exemples de bactéries Gram + potentiellement sensibles aux produits selon la présente invention, en particulier bactéries Gram + résistantes aux médicaments, voire multirésistantes, peuvent être choisies parmi les suivantes, parmi d'autres : *Staphylococcus,* en particulier *Staphylococcus aureus, Enterococcus,* en particulier *Enterococcus faecalis* et *Enterococcus cloacae,* et/ou *Propionibacter,* en particulier *Propionibacter acnes.*

Des exemples de bactéries Gram - potentiellement sensibles aux produits selon la présente invention, en particulier bactéries Gram - résistantes aux médicaments, voire multirésistantes, peuvent être choisies parmi les suivantes, parmi d'autres : *Escherichia,* en particulier *Escherichia coli, Pseudomonas,* en particulier *Pseudomonas aeruginosa,* and *Acinetobacter,* en particulier *Acinetobacter baumanii, Serratia,* en particulier *Serratia marscescens, Citrobacter,* en particulier *Citrobacter freundii, Klebsiella,* en particulier *Klebsiella pneumonia,* et/ou *Enterobacter,* en particulier *Enterobacter aerogenes.*

Des exemples de bactéries anaérobies potentiellement sensibles aux produits selon la présente invention, en particulier bactéries anaérobies résistantes aux médicaments, voire multirésistantes, peuvent être choisies parmi les suivantes, parmi d'autres : Bacteroides, en particulier *B. fragiles* et *B. thetaiotaomicron,* Eggerthella, en particulier *E. lenta*; Peptostreptococcus, en particulier *P. micros, P. spp,* et *P. anaerobius,* Clostridium, en particulier *C. perfringens* et *C. difficile;* et/ou Micromonas.

Des exemples de champignons potentiellement sensibles aux produits selon la présente invention, en particulier champignons résistantes aux médicaments, voire multirésistantes, peuvent être choisies parmi les suivantes, parmi d'autres : champignons kératinique ou Épidermique, dermique, en particulier Candida, Trichophyton, Malassezia et Microsporum, systémique, en particulier dans des maladies non-opportunistes, plus particulièrement liées à Blastomyces, Coccidioides, et aux maladies opportunistes dues à Aspergillus, Candida albicans, Cryptococcus, par exemple.

Des exemples de virus potentiellement sensibles aux produits selon la présente invention sont le virus à ADN ou à ARN, enveloppés ou nus, tels que les virus de la grippe (Influenza), les virus de l'hépatites, du sida, du rhume, des fièvres hélmorragiques, etc.

### Bio-corrosion

Le terme « bio-corrosion » selon la présente invention concerne la corrosion de matériaux directement du à ou suite à l'action d'organismes vivants. Ces organismes vivants peuvent être microscopiques ou macroscopiques, unicellulaires ou pluricellulaires, tels que des bactéries, des algues, des champignons, des mollusques, etc.

### Agent liant

Un agent liant selon la présente invention concerne un produit qui lie les molécules d'un élément à un autre élément, lors de la fusion (généralement à froid) de matériaux. Par exemple, dans le présent cas de figure, un agent liant va permettre d'agglomérer les particules de poudre dans une matrice figée qui peut être polymérique.

### Catalyseur de prise

Le catalyseur de prise permet l'accélération, voire la faisabilité, de la polymérisation en une matrice qui peut être dure ou flexible. Le catalyseur peut être remplacé par un traitement thermique. Le polymère est souvent préparé par réticulation de deux ingrédients, dont l'un est typiquement une « résine », réagissent sous l'action de la chaleur en présence de réactifs (catalyseur et accélérateur de polymérisation). La structure tridimensionnelle (réseau) formée, stable, présente typiquement une résistance thermomécanique et chimique.

### Composite

Un composite est une combinaison de deux matériaux de nature différentes. Dans la présente invention, il s'agit de combiner des particules issus d'une poudre métallique dans une matrice organique ou inorganique figée, pouvant permettre néanmoins une certaine flexibilité mécanique si besoin. Le composite peut être utilisé pour mouler des objets divers et variés et pas seulement limité à la production d'un revêtement de surface.

### Température ambiante

La température ambiante est celle généralement admise comme comprise entre 15 et 30 °C, préférentiellement entre 20 et 25°C.

### Revêtement

Un revêtement (aussi appelé couche mince lorsque son épaisseur est comprise entre quelques microns et quelques centaines de microns) a pour but d'améliorer les propriétés de surface d'un objet. Par exemple et de manière générale, les revêtements peuvent servir pour préserver ou accroître l'apparence, l'adhésion, la résistance à la corrosion, apporter des propriétés particulières quant à la mouillabilité ou ajuster les propriétés de surface de l'objet considéré face aux contraintes mécaniques et aux différents éléments de l'environnement extérieur (ultraviolets, eau, oxydation (corrosion), température, moisissures...). Le revêtement de surface selon la présente invention peut être utilisé sans restriction en diverses épaisseurs et généralement appliqué comme des résines déjà trouvées sur le marché. En outre, le composite selon la présente invention peut être pulvérisé en une fine couche de quelques microns.

Ainsi le revêtement selon la présente invention peut présenter une épaisseur variée de quelques microns à quelques centimètres. L'épaisseur du revêtement est avantageusement comprise entre 10µm à 15 cm, plus avantageusement entre 50µm et 5 cm, encore plus avantageusement entre 100 µm et 1 cm, plus avantageusement encore entre 150µm et 1 mm tel que 200 µm, ou en encore entre 500µm et 1 mm.

Ainsi toute technique physique ou physico-chimique applicable en l'espèce et connue de l'homme du métier peut être utilisée pour la formation du revêtement. Une manipulation supplémentaire pourrait consister en l'utilisation de la technologie laser, ou encore en l'utilisation de champs magnétiques et/ou électriques forts, de l'effet piézoélectrique, d'ultrasons, de l'application d'un électrospray, d'électrochimie, de microondes, ou bien un simple traitement thermique, par exemple.

Le revêtement obtenu au contact de la surface libre du substrat selon le procédé de la présente invention peut présenter une épaisseur sensiblement constante.

### Moulage

Les composites selon la présente invention peuvent être en outre utilisés pour mouler des objets. La technique du moulage consiste à prendre une empreinte qui servira ensuite de moule. Dans ce moule, il sera placé un matériau qui permettra le tirage ou la production en plusieurs exemplaires d'un modèle. Selon la présente invention, le moulage consiste donc à placer un composite dans un moule dont il prendra la forme puis de l'en retirer. L'objet qui découle de ce moulage peut être creux ou rempli du composite ou d'un autre matériau, tel qu'un polymère sans poudre métallique par exemple.

### Surface d'un substrat

Selon le procédé de la présente invention qui consiste à déposer un revêtement sur un substrat, préalablement au dépôt dudit revêtement, avantageusement, la surface du substrat à revêtir est rendue adhésive. Avantageusement, ladite surface est rendue adhésive par fonctionnalisation, par exemple par adsorption de PEI, par nucléation en surface ou encore par minéralisation dudit substrat.

### Substrat

Comme expliqué ci-dessus, le terme « substrat » désigne un support solide sur lequel va être déposé au moins une couche de revêtement selon l'invention. Ce support peut être de toute nature c'est-à-dire naturelle ou synthétique, organique, minérale ou inorganique, cristalline, polycristalline et/ou amorphe.

Dans un mode de réalisation particulier, dans le procédé selon l'invention, le substrat est la coque d'une embarcation, telle qu'un bateau, les foils d'un bateau, d'éléments extérieurs d'avions ou de fusées ou tout support de sports de glisse tels que les carènes d'une planche à voile, d'un kite surf, de skis nautiques, d'un wake board, d'un surf, de skis alpins, d'un snowboard, d'un paddle board, d'un jet ski, d'un canoë, d'un kayak, etc. En effet, le revêtement selon la présente invention permet de limiter les phénomènes de frottements liés aux fluides.

Dans un autre mode de réalisation, le substrat peut être tout matériel hospitalier, tant matériel spécialisé (matériel analytique, chirurgical, siège roulant, béquilles, etc) que plus commun (poignée de porte, interrupteur, plateau adaptable, abattant de WC, barre d'appui dans la douche, robinet mitigeur, etc). Bien entendu, ce matériel peut également être trouvé plus communément en milieu hors hospitalier, en particulier pour des personnes à l'immunité faible, affaiblie, ou susceptible de devenir faible (par exemple par le biais d'un traitement médical influençant l'immunité).

### Fluide

Par « fluide » il est compris selon la présente invention toute substance qui se déforme continuellement sous une contrainte de cisaillement qui lui est appliquée. Ainsi, un fluide peut se définir comme étant une substance dont les molécules ont peu d'adhésion et peuvent glisser librement les unes sur les autres (liquides) ou se déplacer indépendamment les unes par rapport aux autres (gaz), de façon que cette substance prenne la forme de l'espace qui le contient.

### Pulvérisation/pulvérisé

Le terme « pulvérisation » selon la présente invention concerne la production d'un nuage de gouttelettes, c'est à dire contenant des gouttelettes de taille micro ou nanométrique en suspension dans le gaz qui les contient et qui éventuellement les véhicule, ou l'espace qui les contient (dans le cas d'une buse à ultrasons). Une « buse » est un dispositif qui permet une telle pulvérisation.

Les gouttelettes peuvent se toucher au sein même du nuage qu'ils forment. Ces collisions peuvent occasionner des coalescences inter-gouttelettes.

Il est également possible d'utiliser un gaz tel que l'azote ou encore un gaz inerte tel que l'Argon dans la réalisation du procédé que ce soit en tant que gaz porteur dans la pulvérisation, ou tout simplement dans l'enceinte où la pulvérisation est faite, ou les deux. Il est également possible de déposer des revêtements selon la présente invention par l'utilisation par exemple de buses à ultrasons. La présente invention peut être réalisée sous atmosphère ambiante. Il est bien entendu également possible d'utiliser une atmosphère gazeuse oxydante, réductrice ou réactive dans la mise en oeuvre du procédé de la présente invention.

Ainsi, selon le procédé de la présente invention, l'interaction entre les partenaires réactionnels est avantageusement contrôlée par détermination de l'un au moins des paramètres de réglage suivants :
- concentration des partenaires réactionnels dans le/les liquides et viscosité du/des liquides de pulvérisation contenant les partenaires réactionnels ;
- composition et nature du solvant présent dans le/les liquides pulvérisés ;
- température du/des liquides pulvérisés ;
- dimension, densité, vitesse et polydispersité des gouttelettes en fonction de la géométrie et de la nature des buses de pulvérisation ;
- variation des angles au sommet des cônes de dispersions du/des jets de pulvérisation ;
- distance entre les buses et la surface du substrat à revêtir lorsqu'il y a plusieurs buses;
- inclinaison de ladite surface par rapport à l'axe principal du/des jets de pulvérisation ;
- débit du/des jets de pulvérisations;
- débit du gaz porteur utilisé pour la/les pulvérisations ;
- nature, température, débit et/ou pression du gaz porteur utilisé pour la/les pulvérisations.
- nature du support solide.

La pulvérisation selon la présente invention peut être menée en continu ou peut être interrompue, sans que cela porte atteinte à l'intégrité du revêtement obtenu en fin de procédé. La mise en oeuvre du revêtement sur le substrat se fait en contrôlant les paramètres de la pulvérisation, par exemple la viscosité du mélange composite à l'état liquide pulvérisé, la rapidité de prise (par exemple par la quantité de catalyseur, la gestion de la température), le type de buse, le flux d'air, etc. Les mêmes épaisseurs des revêtements sont obtenues, que lesdits revêtements soient produits en une seule étape ou en plusieurs étapes, l'important étant que le temps cumulé de pulvérisation soit constant, même si le revêtement est durcit après chaque étape. Ceci est vrai tant pour des revêtements de base polymérique, organique qu'inorganique.

### Contrôle de la pulvérisation

L'intérêt de la pulvérisation dans la présente invention repose sur l'utilisation de gouttelettes de petite taille et d'un film liquide mince qui se fige pour produire un revêtement dont l'épaisseur peut être contrôlée facilement (rapidité de la prise directement fonction de la quantité de catalyseur par exemple ou de la dilution).

En outre, il est possible de contrôler la surface de recouvrement lors de la pulvérisation selon le procédé de l'invention en interposant un écran muni d'une ouverture pour sélectionner la partie centrale du/des jets de pulvérisation et éviter la contamination de la surface par les bords du/des jets.

La nature de l'écran peut être en tout type de matériau et toute forme possible.

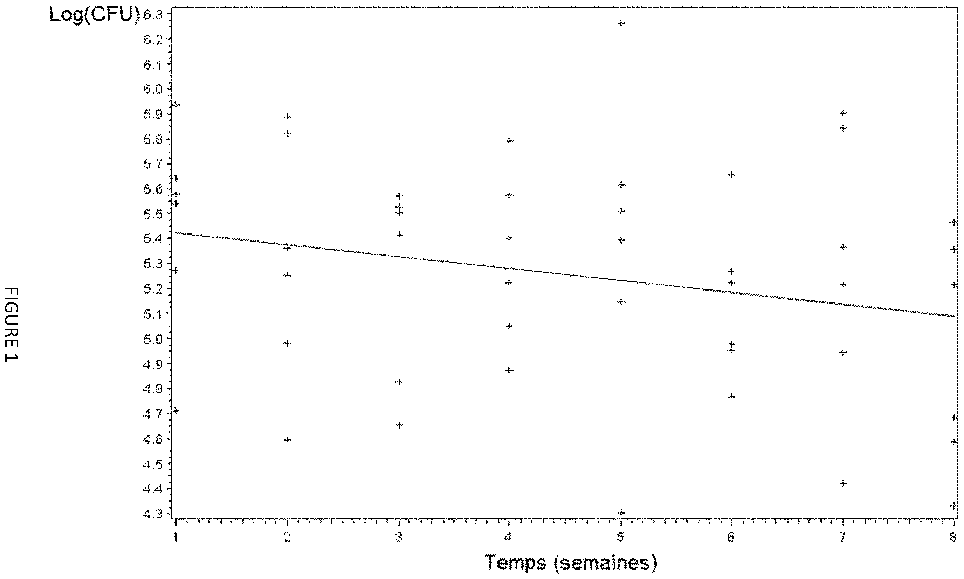

Il peut être avantageux lors de la pulvérisation selon le procédé de l'invention d'ajouter un écran additionnel entre la/les buse(s) et le point de recouvrement du/des jets de pulvérisation muni d'au moins une ouverture passant alternativement devant les jets de pulvérisation pour contrôler les collisions et interactions des gouttelettes pulvérisées (Figure 1).

De manière avantageuse, l'ouverture de l'écran additionnel, entre la/les buse(s) et le point de recouvrement des jets de pulvérisation, est calibrée.

L'écran peut s'intercaler entre la/les buse(s) et le point de recouvrement des jets de pulvérisations par quel que mouvement que ce soit.

De manière avantageuse, l'écran additionnel s'intercale entre la/les buse(s) et le point de recouvrement des jets de pulvérisations par un mouvement rotatif. L'écran est donc dit rotatif dans ce mode de réalisation particulier.

De manière avantageuse, l'écran additionnel s'intercale entre la/les buse(s) et le point de recouvrement des jets de pulvérisations par un mouvement linéaire latéral sur un système de glissières par exemple. L'écran est donc dit linéaire dans ce mode de réalisation particulier.

Il peut être avantageux lors de la pulvérisation selon le procédé de l'invention d'interposer un écran rotatif additionnel entre la/les buse(s) et le point de début de recouvrement des jets de pulvérisation lorsqu'il y a plusieurs jets/buses.

### Positionnement du substrat

Ledit substrat, sur lequel peut être pulvérisé le revêtement, peut être positionné et orienté de quelque manière que ce soit de manière à réaliser une couche plus ou moins mince de composite. Dans un mode de réalisation particulier, ledit substrat peut être positionné de manière verticale afin que le surplus de liquide réactionnel et/ou solvant(s) s'écoulent au fur et à mesure de la pulvérisation. Ledit substrat peut aussi être incliné plus ou moins fortement par rapport à la verticale. Dans un mode de réalisation particulier, ledit substrat peut être positionné de manière horizontale afin que la répartition du revêtement, qui se fige plus ou moins lentement, se fasse de manière homogène.

Les variations de ces inclinaisons sont dépendantes des facteurs de pulvérisation et/ou de la formation du revêtement.

Avantageusement, l'inclinaison dudit substrat par rapport à l'axe verticale est faible pour les réactions rapides de formation du revêtement ou éventuellement ne nécessitant pas de traitement supplémentaire, c'est-à-dire d'un angle compris entre 0° et 45° par rapport à l'axe vertical.

Avantageusement, l'inclinaison dudit substrat par rapport à l'axe horizontale est faible pour les réactions lente ou nécessitant un traitement supplémentaire (par exemple par la technologie laser), c'est-à-dire d'un angle compris entre 0° et 45° par rapport à l'axe horizontale.

### Contrôle du flux d'air : contrôle de l'épaisseur du revêtement

L'épaisseur du revêtement formé peut être directement liée au flux d'air imposé. Ainsi selon le procédé de l'invention, on procède à la pulvérisation d'un flux d'air destiné à contrôler l'épaisseur du revêtement qui se forme au contact de la surface libre du substrat. L'homogénéité de l'épaisseur du revêtement est également influencée par le flux de liquide, la nature du substrat, la viscosité du liquide (concentration) et le positionnement de la/des buses.

### Pulvérisateurs

Différents pulvérisateurs peuvent être utilisés dans la présente invention, comme par exemple :
- un pulvérisateur mono-composé, par exemple pulvérisant un seul liquide sous pression
- un pulvérisateur multi-composé, par exemple un composé chimique en solution dans un milieu solvant,
- un nébulisateur impliquant la pulvérisation d'un gaz et d'un liquide,
- un pulvérisateur piézo électrique,
- un atomisateur, ou encore
- pulvérisateur à ultrasons.

La qualité de la pulvérisation et donc du revêtement obtenu peut également être optimisée par le positionnement de la/des buses du/des pulvérisateurs.

Ainsi de manière avantageuse selon le procédé de la présente invention, les buses sont disposées de manière à ce que les jets de pulvérisation arrivent à la surface du substrat selon une direction essentiellement orthogonale par rapport à ce dernier.

### Carène

Par « carène », il est compris selon la présente invention la partie immergé de la coque d'un navire, ou de toute autre embarcation, ou la partie du substrat (tels que des skis par exemple) directement en contact avec l'élément liquide, solide ou intermédiaire (tel que la neige) qui créer un frottement.

### Oxydation à coeur

Par « oxydation à coeur », il est compris selon la présente invention, que les grains de la poudre de cuivre oxydée sont oxydés à la fois en surface et au centre des grains qui composent ladite poudre. Le taux d'oxydation peut néanmoins varier selon une ligne droite qui irait de la surface du grain au centre (c'est-à-dire centre de gravité) du grain. Typiquement la surface du grain est plus oxydée que ne l'est le centre de par la plus grande entropie que la surface présente. Avantageusement le centre présente un taux d'oxydation qui est 50% en masse inférieure à celui de la surface, plus avantageusement encore le centre présente un taux d'oxydation qui est 25% en masse inférieure à celui de la surface, encore plus avantageusement le centre présente un taux d'oxydation qui est 10% en masse inférieure à celui de la surface, plus avantageusement que cela le centre présente un taux d'oxydation qui est 5% en masse inférieure à celui de la surface, de manière la plus avantageuse le centre présente un taux d'oxydation qui est identique à celui de la surface.

### Taux d'oxydation

De manière générale, l'oxydation implique une perte d'électrons de l'entité oxydée. Dans la présente invention, ceci se traduit par la mise en réaction d'oxygène avec le cuivre dans la poudre. Par exemple dans le cas où la poudre ne contient initialement que du cuivre, le « taux d'oxydation » selon la présente invention fait alors référence à la quantité massique initiale de cuivre à l'état d'oxydation zéro (« Cu⁰ ») qui est oxydé en CuO, soit le cuivre est à l'état d'oxydation +2. De manière générale le taux d'oxydation fait donc référence à la quantité de cuivre qui est oxydé et représente donc un ratio de quantités (masse, mole) du cuivre qui est engagé dans la réaction d'oxydation.

De manière générale selon la présente invention, la quantité de cuivre étant prépondérante, par mesure de praticité, il est fait référence par approximation à des taux massiques. En toute rigueur, il s'agirait de taux molaires.

### Pigment

Dans le cadre de la présente invention, par « pigment » il est compris une substance colorante insoluble dans la matrice du matériau qui le contienne. Préférentiellement le pigment est une substance colorante de composite c'est-à-dire pour teinter dans la masse un composite comprenant un agent liant et éventuellement un catalyseur de prise. De manière préférée les pigments selon la présente invention permettent d'obtenir des revêtements/composites de couleurs noires, anthracites, ou noire avec des légers reflets bruns, ou encore brun foncé selon la nature et la concentration du pigment (poudre).

### DESCRIPTION DETAILLEE

Plus particulièrement, l'objet de la présente invention concerne une composition de poudre de cuivre oxydée et/ou phosphorée telle que définie ci-dessus dans laquelle la masse cuivre est supérieure ou égale à 65%, avantageusement supérieure à 70%, plus avantageusement supérieure à 75%, plus avantageusement encore supérieure à 80%, encore plus avantageusement supérieure à 85%, encore plus avantageusement supérieure à 90%, encore plus avantageusement supérieure à 95%, encore plus avantageusement supérieure à 97%, encore plus avantageusement supérieure à 98%, encore plus avantageusement supérieure à 99%, encore plus avantageusement supérieure à 99,5%, encore plus avantageusement supérieure à 99,9% en masse en comparaison avec la masse totale de la composition de poudre.

La quantité de cuivre dans le mélange va directement influencer l'activité biocide du revêtement/composite final.

Un autre facteur qu'il convient de prendre en compte est la granulométrie de la poudre. En effet, totalement indépendamment du taux de cuivre que contient la poudre de cuivre oxydée et/ou phosphorée, la granulométrie de la poudre de cuivre oxydée et/ou phosphorée selon la présente invention va être déterminante afin de réaliser le revêtement/composite avec l'agent liant. En effet, si la poudre est trop fine, contrairement à ce qu'il aurait pu être attendu avant la réalisation de la présente invention, le composite ne se forme pas correctement est présente des propriétés physico-chimiques (dureté, friabilité, flexibilité, etc) inacceptables. Ainsi il semble qu'il ait un seuil qui se situe vers 70% en masse de grains de la composition de poudre de cuivre oxydée et/ou phosphorée telle que définie ci-dessus dont le diamètre est inférieur à 45µm au maximum qui ne doit pas être franchi pour que le revêtement/composite final puisse être fabriqué.

Dans un mode réalisation particulier, la poudre de cuivre oxydée et/ou phosphorée ne contient pas plus de 65% en masse de grains dont le diamètre est inférieur à 45µm au maximum.

Dans un mode réalisation particulier, la poudre de cuivre oxydée et/ou phosphorée ne contient pas plus de 60% en masse de grains dont le diamètre est inférieur à 45µm au maximum.

Dans un mode réalisation particulier, la poudre de cuivre oxydée et/ou phosphorée ne contient pas plus de 58,8% en masse de grains dont le diamètre est inférieur à 45µm au maximum.

Dans un mode réalisation particulier, la poudre de cuivre oxydée et/ou phosphorée ne contient pas plus de 55% en masse de grains dont le diamètre est inférieur à 45µm au maximum.

Dans un mode réalisation particulier, la poudre de cuivre oxydée et/ou phosphorée ne contient pas plus de 50% en masse de grains dont le diamètre est inférieur à 45µm au maximum.

Dans un mode réalisation particulier, la poudre de cuivre oxydée et/ou phosphorée ne contient pas plus de 45% en masse de grains dont le diamètre est inférieur à 45µm au maximum.

Dans un mode réalisation particulier, la poudre de cuivre oxydée et/ou phosphorée ne contient pas plus de 40% en masse de grains dont le diamètre est inférieur à 45µm au maximum.

Dans un mode réalisation particulier, la poudre de cuivre oxydée et/ou phosphorée ne contient pas plus de 35% en masse de grains dont le diamètre est inférieur à 45µm au maximum.

Dans un mode réalisation particulier, la poudre de cuivre oxydée et/ou phosphorée ne contient pas plus de 25% en masse de grains dont le diamètre est inférieur à 45µm au maximum.

Dans un mode réalisation particulier, la poudre de cuivre oxydée et/ou phosphorée ne contient pas plus de 20% en masse de grains dont le diamètre est inférieur à 45µm au maximum.

Dans un mode réalisation particulier, la poudre de cuivre oxydée et/ou phosphorée ne contient pas plus de 15% en masse de grains dont le diamètre est inférieur à 45µm au maximum.

Dans un mode réalisation particulier, la poudre de cuivre oxydée et/ou phosphorée ne contient pas plus de 10% en masse de grains dont le diamètre est inférieur à 45µm au maximum.

Dans un mode réalisation particulier, la poudre de cuivre oxydée et/ou phosphorée ne contient pas plus de 5% en masse de grains dont le diamètre est inférieur à 45µm au maximum.

Dans un mode réalisation particulier, la poudre de cuivre oxydée et/ou phosphorée ne contient pas plus de 2% en masse de grains dont le diamètre est inférieur à 45µm au maximum.

Dans un mode réalisation particulier, la poudre de cuivre oxydée et/ou phosphorée ne contient pas plus de 1% en masse de grains dont le diamètre est inférieur à 45µm au maximum.

Dans un mode réalisation particulier, la poudre de cuivre oxydée et/ou phosphorée ne contient pas de grains dont le diamètre est inférieur à 45µm au maximum.

Ces modes de réalisations particuliers dans lesquels sont définis la quantité maximale de grains dont le diamètre est inférieur à 45µm peuvent être individuellement combinées aux gammes suivantes de quantité minimale de grains dont le diamètre est inférieur à 63 µm au maximum dans la composition de poudre de cuivre oxydée et/ou phosphorée selon la présente invention.

Avantageusement, la poudre de cuivre oxydée et/ou phosphorée contient au moins 1% en masse de grains dont le diamètre est inférieur à 63 µm au maximum.

Plus avantageusement, la poudre de cuivre oxydée et/ou phosphorée contient au moins 2% en masse de grains dont le diamètre est inférieur à 63 µm au maximum.

Plus avantageusement encore, la poudre de cuivre oxydée et/ou phosphorée contient au moins 5% en masse de grains dont le diamètre est inférieur à 63 µm au maximum.

Plus avantageusement encore, la poudre de cuivre oxydée et/ou phosphorée contient au moins 10% en masse de grains dont le diamètre est inférieur à 63 µm au maximum.

Plus avantageusement encore, la poudre de cuivre oxydée et/ou phosphorée contient au moins 15% en masse de grains dont le diamètre est inférieur à 63 µm au maximum.

Plus avantageusement encore, la poudre de cuivre oxydée et/ou phosphorée contient au moins 20% en masse de grains dont le diamètre est inférieur à 63 µm au maximum.

Plus avantageusement encore, la poudre de cuivre oxydée et/ou phosphorée contient au moins 25% en masse de grains dont le diamètre est inférieur à 63 µm au maximum.

Plus avantageusement encore, la poudre de cuivre oxydée et/ou phosphorée contient au moins 30% en masse de grains dont le diamètre est inférieur à 63 µm au maximum.

Plus avantageusement encore, la poudre de cuivre oxydée et/ou phosphorée contient au moins 35% en masse de grains dont le diamètre est inférieur à 63 µm au maximum.

Plus avantageusement encore, la poudre de cuivre oxydée et/ou phosphorée contient au moins 40% en masse de grains dont le diamètre est inférieur à 63µm au maximum.

Plus avantageusement encore, la poudre de cuivre oxydée et/ou phosphorée contient au moins 45% en masse de grains dont le diamètre est inférieur à 63µm au maximum.

Plus avantageusement encore, la poudre de cuivre oxydée et/ou phosphorée contient au moins 50% en masse de grains dont le diamètre est inférieur à 63µm au maximum.

Plus avantageusement encore, la poudre de cuivre oxydée et/ou phosphorée contient au moins 55% en masse de grains dont le diamètre est inférieur à 63µm au maximum.

Plus avantageusement encore, la poudre de cuivre oxydée et/ou phosphorée contient au moins 60% en masse de grains dont le diamètre est inférieur à 63µm au maximum.

Plus avantageusement encore, la poudre de cuivre oxydée et/ou phosphorée contient au moins 65% en masse de grains dont le diamètre est inférieur à 63µm au maximum.

Plus avantageusement encore, la poudre de cuivre oxydée et/ou phosphorée contient au moins 70% en masse de grains dont le diamètre est inférieur à 63µm au maximum.

Plus avantageusement encore, la poudre de cuivre oxydée et/ou phosphorée contient au moins 75% en masse de grains dont le diamètre est inférieur à 63µm au maximum.

Plus avantageusement encore, la poudre de cuivre oxydée et/ou phosphorée contient au moins 80% en masse de grains dont le diamètre est inférieur à 63µm au maximum.

Plus avantageusement encore, la poudre de cuivre oxydée et/ou phosphorée contient au moins 85% en masse de grains dont le diamètre est inférieur à 63µm au maximum.

Plus avantageusement encore, la poudre de cuivre oxydée et/ou phosphorée contient au moins 90% en masse de grains dont le diamètre est inférieur à 63µm au maximum.

Plus avantageusement encore, la poudre de cuivre oxydée et/ou phosphorée contient au moins 95% en masse de grains dont le diamètre est inférieur à 63µm au maximum.

Plus avantageusement encore, la poudre de cuivre oxydée et/ou phosphorée contient au moins 97% en masse de grains dont le diamètre est inférieur à 63µm au maximum.

Plus avantageusement encore, la poudre de cuivre oxydée et/ou phosphorée contient au moins 98% en masse de grains dont le diamètre est inférieur à 63µm au maximum.

Plus avantageusement encore, la poudre de cuivre oxydée et/ou phosphorée contient au moins 99% en masse de grains dont le diamètre est inférieur à 63µm au maximum.

Plus avantageusement encore, la poudre de cuivre oxydée et/ou phosphorée contient au moins 99,5% en masse de grains dont le diamètre est inférieur à 63µm au maximum.

Par exemple selon un mode de réalisation de la présente invention, la poudre de cuivre oxydée et/ou phosphorée ne contient pas plus de 70% en masse de grains dont le diamètre est inférieur à 45µm au maximum et au moins 1%, 2%, 5%, 10%, 15%, 20%, 25%, 30%, 35% ou 40% en masse de grains dont le diamètre est inférieur à 63µm au maximum.

Par exemple selon un mode de réalisation de la présente invention, la poudre de cuivre oxydée et/ou phosphorée ne contient pas plus de 65% en masse de grains dont le diamètre est inférieur à 45µm au maximum et au moins 1%, 2%, 5%, 10%, 15%, 20%, 25%, 30%, 35% ou 40% en masse de grains dont le diamètre est inférieur à 63µm au maximum.

Par exemple selon un mode de réalisation de la présente invention, la poudre de cuivre oxydée et/ou phosphorée ne contient pas plus de 60% en masse de grains dont le diamètre est inférieur à 45µm au maximum et au moins 1%, 2%, 5%, 10%, 15%, 20%, 25%, 30%, 35% ou 40% en masse de grains dont le diamètre est inférieur à 63µm au maximum.

Par exemple selon un mode de réalisation de la présente invention, la poudre de cuivre oxydée et/ou phosphorée ne contient pas plus de 58,8% en masse de grains dont le diamètre est inférieur à 45µm au maximum et au moins au moins 1%, 2%, 5%, 10%, 15%, 20%, 25%, 30%, 35% ou 40% en masse de grains dont le diamètre est inférieur à 45µm au maximum.

Par exemple selon un mode de réalisation de la présente invention, la poudre de cuivre oxydée et/ou phosphorée ne contient pas plus de 55% en masse de grains dont le diamètre est inférieur à 45µm au maximum et au moins au moins 1%, 2%, 5%, 10%, 15%, 20%, 25%, 30%, 35%, 40% ou 45% en masse de grains dont le diamètre est inférieur à 45µm au maximum.

Par exemple selon un mode de réalisation de la présente invention, la poudre de cuivre oxydée et/ou phosphorée ne contient pas plus de 50% en masse de grains dont le diamètre est inférieur à 45µm au maximum et au moins au moins 1%, 2%, 5%, 10%, 15%, 20%, 25%, 30%, 35%, 40%, 45% ou 50% en masse de grains dont le diamètre est inférieur à 45µm au maximum.

Par exemple selon un mode de réalisation de la présente invention, la poudre de cuivre oxydée et/ou phosphorée ne contient pas plus de 45% en masse de grains dont le diamètre est inférieur à 45µm au maximum et au moins au moins 1%, 2%, 5%, 10%, 15%, 20%, 25%, 30%, 35%, 40%, 45%, 50% ou 55% en masse de grains dont le diamètre est inférieur à 45µm au maximum.

Par exemple selon un mode de réalisation de la présente invention, la poudre de cuivre oxydée et/ou phosphorée ne contient pas plus de 40% en masse de grains dont le diamètre est inférieur à 45µm au maximum et au moins au moins 1%, 2%, 5%, 10%, 15%, 20%, 25%, 30%, 35%, 40%, 45%, 50%, 55 ou 60% en masse de grains dont le diamètre est inférieur à 45µm au maximum.

Par exemple selon un mode de réalisation de la présente invention, la poudre de cuivre oxydée et/ou phosphorée ne contient pas plus de 40% en masse de grains dont le diamètre est inférieur à 45µm au maximum et au moins au moins 1%, 2%, 5%, 10%, 15%, 20%, 25%, 30%, 35%, 40%, 45%, 50%, 55% ou 60% en masse de grains dont le diamètre est inférieur à 45µm au maximum.

Par exemple selon un mode de réalisation de la présente invention, la poudre de cuivre oxydée et/ou phosphorée ne contient pas plus de 35% en masse de grains dont le diamètre est inférieur à 45µm au maximum et au moins au moins 1%, 2%, 5%, 10%, 15%, 20%, 25%, 30%, 35%, 40%, 45%, 50%, 55%, 60% ou 65% en masse de grains dont le diamètre est inférieur à 45µm au maximum.

Par exemple selon un mode de réalisation de la présente invention, la poudre de cuivre oxydée et/ou phosphorée ne contient pas plus de 30% en masse de grains dont le diamètre est inférieur à 45µm au maximum et au moins au moins 1%, 2%, 5%, 10%, 15%, 20%, 25%, 30%, 35%, 40%, 45%, 50%, 55%, 60%, 65% ou 70% en masse de grains dont le diamètre est inférieur à 45µm au maximum.

Par exemple selon un mode de réalisation de la présente invention, la poudre de cuivre oxydée et/ou phosphorée ne contient pas plus de 25% en masse de grains dont le diamètre est inférieur à 45µm au maximum et au moins au moins 1%, 2%, 5%, 10%, 15%, 20%, 25%, 30%, 35%, 40%, 45%, 50%, 55%, 60%, 65%, 70% ou 75% en masse de grains dont le diamètre est inférieur à 45µm au maximum.

Par exemple selon un mode de réalisation de la présente invention, la poudre de cuivre oxydée et/ou phosphorée ne contient pas plus de 20% en masse de grains dont le diamètre est inférieur à 45µm au maximum et au moins au moins 1%, 2%, 5%, 10%, 15%, 20%, 25%, 30%, 35%, 40%, 45%, 50%, 55%, 60%, 65%, 70%, 75% ou 80% en masse de grains dont le diamètre est inférieur à 45µm au maximum.

Par exemple selon un mode de réalisation de la présente invention, la poudre de cuivre oxydée et/ou phosphorée ne contient pas plus de 15% en masse de grains dont le diamètre est inférieur à 45µm au maximum et au moins au moins 1%, 2%, 5%, 10%, 15%, 20%, 25%, 30%, 35%, 40%, 45%, 50%, 55%, 60%, 65%, 70%, 75%, 80% ou 85% en masse de grains dont le diamètre est inférieur à 45µm au maximum.

Par exemple selon un mode de réalisation de la présente invention, la poudre de cuivre oxydée et/ou phosphorée ne contient pas plus de 10% en masse de grains dont le diamètre est inférieur à 45µm au maximum et au moins au moins 1%, 2%, 5%, 10%, 15%, 20%, 25%, 30%, 35%, 40%, 45%, 50%, 55%, 60%, 65%, 70%, 75%, 80%, 85% ou 90% en masse de grains dont le diamètre est inférieur à 45µm au maximum.

Par exemple selon un mode de réalisation de la présente invention, la poudre de cuivre oxydée et/ou phosphorée ne contient pas plus de 5% en masse de grains dont le diamètre est inférieur à 45µm au maximum et au moins au moins 1%, 2%, 5%, 10%, 15%, 20%, 25%, 30%, 35%, 40%, 45%, 50%, 55%, 60%, 65%, 70%, 75%, 80%, 85%, 90% ou 95% en masse de grains dont le diamètre est inférieur à 45µm au maximum. Par exemple selon un mode de réalisation de la présente invention, la poudre de cuivre oxydée et/ou phosphorée ne contient pas plus de 2% en masse de grains dont le diamètre est inférieur à 45µm au maximum et au moins au moins 1%, 2%, 5%, 10%, 15%, 20%, 25%, 30%, 35%, 40%, 45%, 50%, 55%, 60%, 65%, 70%, 75%, 80%, 85%, 90%, 95% ou 98% en masse de grains dont le diamètre est inférieur à 45µm au maximum.

Par exemple selon un mode de réalisation de la présente invention, la poudre de cuivre oxydée et/ou phosphorée ne contient pas plus de 1% en masse de grains dont le diamètre est inférieur à 45µm au maximum et au moins au moins 1%, 2%, 5%, 10%, 15%, 20%, 25%, 30%, 35%, 40%, 45%, 50%, 55%, 60%, 65%, 70%, 75%, 80%, 85%, 90%, 95%, 98% ou 99% en masse de grains dont le diamètre est inférieur à 45µm au maximum.

Par exemple selon un mode de réalisation de la présente invention, la poudre de cuivre oxydée et/ou phosphorée ne contient pas plus de 0,5% en masse de grains dont le diamètre est inférieur à 45µm au maximum et au moins au moins 1%, 2%, 5%, 10%, 15%, 20%, 25%, 30%, 35%, 40%, 45%, 50%, 55%, 60%, 65%, 70%, 75%, 80%, 85%, 90%, 95%, 98%, 99% ou 99,5% en masse de grains dont le diamètre est inférieur à 45µm au maximum.

Ces modes de réalisations particuliers peuvent être individuellement combinées aux gammes supérieures suivantes taille supérieure de grains. En effet selon un mode de réalisation de la présente invention, les grains de poudre sont tous inférieurs en diamètre à 500µm.

Avantageusement, les grains de poudre sont tous inférieurs en diamètre à 250µm.

Plus avantageusement, les grains de poudre sont tous inférieurs en diamètre à 200µm.

Plus avantageusement, les grains de poudre sont tous inférieurs en diamètre à 150µm.

Plus avantageusement, les grains de poudre sont tous inférieurs en diamètre à 125µm.

Plus avantageusement, les grains de poudre sont tous inférieurs en diamètre à 110µm.

Plus avantageusement, les grains de poudre sont tous inférieurs en diamètre à 100µm.

Plus avantageusement, les grains de poudre sont tous inférieurs en diamètre à 95µm.

Plus avantageusement, les grains de poudre sont tous inférieurs en diamètre à 90µm.

Plus avantageusement, les grains de poudre sont tous inférieurs en diamètre à 85µm.

Plus avantageusement, les grains de poudre sont tous inférieurs en diamètre à 80µm.

Plus avantageusement, les grains de poudre sont tous inférieurs en diamètre à 70µm.

Plus avantageusement, les grains de poudre sont tous inférieurs en diamètre à 65µm.

Plus avantageusement, les grains de poudre sont tous inférieurs en diamètre à 60µm.

Ainsi, plus particulièrement, l'objet de la présente invention concerne une composition de poudre de cuivre oxydée et/ou phosphorée telle que définie ci-dessus dans laquelle la granulométrie présente des caractéristiques spécifiques qui sont détaillées ci-dessous.

Selon un mode de réalisation particulier de l'invention, la poudre contient des grains de diamètres D suivants :

| | |
|---|---|
| 1 ± 1% en masse de grains de diamètre D1 : | 125µm≤D1 |
| 2 ± 2% en masse de grains de diamètre D2 : | 106µm≤D2<125µm |
| 12 ± 10% en masse de grains de diamètre D3 : | 75µm≤D3<106µm |
| 10 ± 5% en masse de grains de diamètre D5 : | 63µm≤D5<75µm |
| 20 ± 10% en masse de grains de diamètre D6 : | 45µm≤D6<63µm |
| 40 ± 30% en masse de grains de diamètre D7 : | D7≤45µm |

Selon un mode de réalisation avantageux de l'invention, la poudre contient des grains de diamètres D suivants :

| | |
|---|---|
| 1 ± 1% en masse de grains de diamètre D1 : | 125µm≤D1 |
| 2 ± 2% en masse de grains de diamètre D2 : | 106µm≤D2<125µm |
| 5 ± 5% en masse de grains de diamètre D3 : | 90µm≤D3<106µm |
| 7 ± 5% en masse de grains de diamètre D4 : | 75µm≤D4<90µm |
| 10 ± 5% en masse de grains de diamètre D5 : | 63µm≤D5<75µm |
| 20 ± 10% en masse de grains de diamètre D6 : | 45µm≤D6<63µm |
| 40 ± 30% en masse de grains de diamètre D7 : | D7≤45µm |

Selon un mode de réalisation avantageux de l'invention, la poudre contient des grains de diamètres D suivants :

| | |
|---|---|
| 1 ± 0,5% en masse de grains de diamètre D1 : | 125µm≤D1 |
| 2 ± 1% en masse de grains de diamètre D2 : | 106µm≤D2<125µm |
| 5 ± 2% en masse de grains de diamètre D3 : | 90µm≤D3<106µm |
| 7 ± 2% en masse de grains de diamètre D4 : | 75µm≤D4<90µm |
| 10 ± 3% en masse de grains de diamètre D5 : | 63µm≤D5<75µm |
| 20 ± 5% en masse de grains de diamètre D6 : | 45µm≤D6<63µm |
| 50 ± 20% en masse de grains de diamètre D7 : | D7≤45µm |

Selon un mode de réalisation plus avantageux de l'invention, la poudre contient des grains de diamètres D suivants :

| | |
|---|---|
| 0,9 ± 0,1 % en masse de grains de diamètre D1 : | 125µm≤D1 |
| 1,5 ± 0.5% en masse de grains de diamètre D2 : | 106µm≤D2<125µm |
| 4,5 ± 1% en masse de grains de diamètre D3 : | 90µm≤D3<106µm |
| 6,5 ± 1% en masse de grains de diamètre D4 : | 75µm≤D4<90µm |
| 8,5 ± 1% en masse de grains de diamètre D5 : | 63µm≤D5<75µm |
| 18 ± 5% en masse de grains de diamètre D6 : | 45µm≤D6<63µm |
| 60 ± 10% en masse de grains de diamètre D7 : | D7≤45µm |

Selon un mode de réalisation plus avantageux de l'invention, la poudre contient des grains de diamètres D suivants :

| | |
|---|---|
| 0,9 ± 0,1 % en masse de grains de diamètre D1 : | 125µm≤D1 |
| 1,5 ± 0.5% en masse de grains de diamètre D2 : | 106µm≤D2<125µm |
| 4,5 ± 1% en masse de grains de diamètre D3 : | 90µm≤D3<106µm |
| 6,5 ± 1% en masse de grains de diamètre D4 : | 75µm≤D4<90µm |
| 8,5 ± 1% en masse de grains de diamètre D5 : | 63µm≤D5<75µm |
| 18 ± 5% en masse de grains de diamètre D6 : | 45µm≤D6<63µm |
| 60 ± 5% en masse de grains de diamètre D7 : | D7≤45µm |

Selon un mode de réalisation encore plus avantageux de l'invention, la poudre contient des grains de diamètres D suivants :

| | |
|---|---|
| 0,9 % en masse de grains de diamètre D1 : | 125µm≤D1 |
| 1,5 % en masse de grains de diamètre D2 : | 106µm≤D2<125µm |
| 4,5 % en masse de grains de diamètre D3 : | 90µm≤D3<106µm |
| 6,6 % en masse de grains de diamètre D4 : | 75µm≤D4<90µm |
| 8,4 % en masse de grains de diamètre D5 : | 63µm≤D5<75µm |
| 20,8 % en masse de grains de diamètre D6 : | 45µm≤D6<63µm |
| 58,8 % en masse de grains de diamètre D7 : | D7≤45µm |

Selon un mode de réalisation avantageux de l'invention, la poudre contient des grains de diamètres D suivants :

| | |
|---|---|
| 1,0 % en masse de grains de diamètre D2 : | 106µm≤D2 |
| 8,1 % en masse de grains de diamètre D3' : | 75µm≤D3'<106µm |
| 7,9 % en masse de grains de diamètre D5 : | 63µm≤D5<75µm |
| 19,2 % en masse de grains de diamètre D6 : | 45µm≤D6<63µm |
| 63,8 % en masse de grains de diamètre D7 : | D7≤45µm |

De manière classique, les pourcentages massiques sont additionnés pour avoir une granulométrie cumulative selon la norme ISO 4497. Il est facile pour l'homme du métier au vu des gammes données ci-dessus de simplement additionner les valeurs pour retrouver les normes actuelles de granulométrie (cumulative).

Comme précédemment dit, ces valeurs de granulométrie sont indépendantes de la nature chimique de la poudre, et permettent simplement l'incorporation des poudres dans un liant.

En ce qui concerne la densité des compositions, de manière générale, celle-ci est comprise entre 1 et 5 g/cm³, plus particulièrement entre 1,5 et 3 g/cm³, entre 1,5 et 2 g/cm³, entre 2 et 3 g/cm³, entre 2 et 2,5 g/cm³, entre 2,5 et 3 g/cm³. La densité va dépendre à la fois de la granulométrie et de la nature chimique de la poudre, en particulier de son degré d'oxydation.

La composition de cuivre oxydée selon la présente invention est caractérisée en ce que le cuivre est oxydé à divers degrés, c'est-à-dire allant d'une oxydation superficielle des grains de cuivre à une oxydation à coeur.

Préférentiellement, la composition de cuivre oxydée selon la présente invention est caractérisée en ce que les grains de cuivre sont oxydés à coeur.

La composition de cuivre oxydée selon la présente invention est caractérisée en ce que le cuivre est oxydé à divers taux, par exemple, la composition de cuivre oxydée peut être oxydée à 5%, 10%, 15, 20%, 25%, 30%, 35%, 40%, 45%, 50%, 55%, 60%, 65%, 70%, 75%, 80%, 85%, 90% ou 95% en masse de cuivre oxydé vis-à-vis de la masse totale de cuivre.

Ce degré d'oxydation permet d'ajuster l'activité biocide du revêtement/composite final. Selon un mode de réalisation de la présente invention, la composition de cuivre oxydée selon la présente invention est caractérisée en ce que le taux d'oxydation du cuivre est supérieur à 95 % en masse de cuivre oxydé vis-à-vis de la masse totale de cuivre et/ou que la quantité de phosphore est comprise entre 2 et 16%, préférentiellement 8% en masse vis-à-vis de la masse totale de poudre.

Par exemple, selon un mode de réalisation de la présente invention, la composition de cuivre oxydée selon la présente invention est caractérisée en ce que le taux d'oxydation du cuivre est de 95,5 %, 96%, 96,5%, 97%, 97,5%, 98%, 98,5%, 99%, 99,5%, 99,7%, 99,8%, 99,9% ou 100% en masse de cuivre oxydé vis-à-vis de la masse totale de cuivre. Selon un mode de réalisation de la présente invention, la composition de cuivre oxydée et/ou phosphorée selon la présente invention est caractérisée en ce que ladite composition comprend un autre métal que le cuivre ou un composé inorganique non métallique pouvant être en une proportion complémentaire au cuivre. Par exemple la poudre de cuivre oxydée peut comprendre 75% de cuivre et 25 % de chrome.

Par exemple, la composition de cuivre oxydée et/ou phosphorée selon la présente invention peut être caractérisée en ce que ladite composition comprend au moins un autre métal que le cuivre, préférentiellement choisi dans le groupe constitué par le magnésium, l'étain, le technétium, le rhénium, le fer, le chrome, le cobalt, le zinc, le platine, le cadmium, l'aluminium, le nickel, l'argent, le béryllium, le calcium, le strontium, préférentiellement le magnésium, et/ou au moins un composé inorganique non métallique tel que l'azote, l'arsenic, le soufre, le fluor, le chlore, le brome, le carbone, le silicium.

Ainsi, avantageusement la composition de cuivre oxydée et/ou phosphorée selon la présente invention peut être caractérisée en ce que ladite composition comprend un autre métal que le cuivre choisi dans le groupe constitué par le magnésium, l'étain, le fer, le chrome, le cobalt, le zinc, le platine, l'aluminium, le nickel et l'argent.

Un autre objet de la présente invention concerne un procédé de fabrication d'une composition comme définie ci-dessus, caractérisé en ce que le cuivre est oxydé à une température égale ou supérieure à 500 °C en présence d'oxygène et/ou d'une source d'oxygène, préférentiellement en présence de magnésium ou de phosphore.

Selon un mode de réalisation, la température est supérieure à 800°C, 1000°C, 1500°C ou 2000°C.

Il peut être directement soufflé de l'oxygène ou un gaz contenant de l'oxygène. De manière générale ceci se fait à l'air libre. Il peut également être incorporé un composé à même la poudre qui, lorsqu'il est chauffé, libérera de l'oxygène.

Bien entendu, le cuivre peut être fractionné avant d'être chauffé pour permettre une meilleure oxydation. Le cuivre peut néanmoins être oxydé avant son fractionnement en poudre.

Le fractionnement en poudre peut se faire par toute technique connue dans l'art, que ce soit par fractionnement mécanique, chimique, physique etc. Il est possible d'obtenir la poudre voulue selon la présente invention directement par un fractionnement adéquat, ce qui implique une parfaite maîtrise de la technique par l'opérateur qui fait néanmoins appel aux connaissances communes dans l'art. Il est en outre bien connu dans l'art une technique alternative plus facile qui consiste à fractionner la matière de manière grossière et peu régulière en granulométrie, puis par l'opération de tamisages successifs, d'isoler des populations de poudres particulières (c'est-à-dire présentant des granulométries particulières et régulières). Dans le cadre de la présente invention cette technique est tout à fait applicable : Un fractionnement brut peut être opéré, suivi d'une étape d'échantillonnage et isolement des poudres particulières, puis une étape de sélection de poudres afin de reconstituer la poudre selon l'invention. Ces techniques sont extrêmement communes dans l'art. Le contrôle de la granulométrie fait en effet partie des connaissances générales de l'homme du métier. Ainsi, il est évident dans le contexte de la présente invention de la possibilité d'ajouter d'autres composés/poudres tels que des poudres métalliques afin d'obtenir une composition « mixte », présentant les effets techniques décrits présentement en addition d'autres effets apportés par les composés/poudres secondaires ajoutés. Ainsi, un mode de réalisation de la présente demande de brevet concerne un procédé de fabrication d'une composition selon la présente invention caractérisé en ce que la poudre de cuivre oxydée est obtenue directement par fractionnement ou est reconstituée à partir de plusieurs poudres aux granulométries et proportions de cuivre déterminées. Avantageusement, les poudres aux granulométries déterminées ont été obtenues par l'une quelconque des techniques de fractionnement connues dans l'art, suivies d'au moins deux passages sur tamis moléculaires permettant d'assurer que la taille des particules constituant la poudre ne sont ni trop petites, ni trop grosses en des quantités déterminées, assurant ainsi le parfait contrôle des caractéristiques essentielles nécessaires à la réalisation de la présente invention. En outre, les techniques de détermination du taux de cuivre sont extrêmement communes dans l'art et peuvent être faites par voies chimiques et/ou physiques. Néanmoins et préférentiellement, le fractionnement se fait par une technique d'atomisation, par exemple à l'eau (suite à fusion métallique). De manière avantageuse les particules obtenues par de telles techniques sont comprises entre 8 et 150 µm (D50) et la quantité d'oxygène comprise dans la composition est entre 0,3 et 5% en poids. Néanmoins, selon un mode de réalisation de l'invention l'oxydation du cuivre à proprement dite peut être après le fractionnement par le passage de la composition dans le four sous atmosphère contrôlée.

Selon un mode de réalisation de la présente invention, le composite de poudre de cuivre oxydée et/ou phosphorée et d'agent liant tel que défini ci-dessus, est caractérisé en ce que l'agent liant est un polymère organique préférentiellement choisi parmi le polyester, le polyuréthane, un polymère époxy, vinyle ester ou un polymère inorganique préférentiellement choisi parmi la silice, les polydiméthylsiloxanes, les polythiazyles, les polysilanes, les polygermanes, plus préférentiellement un polymère de silice tel que le verre.

Selon un mode de réalisation de la présente invention, le composite de poudre de cuivre oxydé et/ou phosphorée et de l'agent liant tel que défini ci-dessus est caractérisé en ce que la proportion en masse de la composition en poudre / liant est comprise de 1/2 à 2/1 respectivement, préférentiellement de 1,275 / 1 respectivement ou 1/1,5 respectivement, préférentiellement 1/1,5 dans le cas de résines vinylesters.

Par exemple le composite de poudre de cuivre oxydé et/ou phosphorée et de l'agent liant tel que défini ci-dessus est caractérisé en ce que la proportion en masse de la composition en poudre / liant est comprise de 1,1/1 à 1,5/1 respectivement, de 1,15/1 à 1,4/1 respectivement, de 1,2/1 à 1,35/1 respectivement, de 1,25/1 à 1,3/1 respectivement, ou est de 1,275 / 1 respectivement.

Par exemple le composite de poudre de cuivre oxydé et/ou phosphorée et de l'agent liant tel que défini ci-dessus est caractérisé en ce que la proportion en masse de la composition en poudre / liant est comprise de 1/1,1 à 1/1,8 respectivement, de 1/1,2 à 1/1,7 respectivement, de 1/1,3 à 1/1,6 respectivement, de 1/1,4 à 1/1,55 respectivement, ou est de 1/1,5 respectivement, préférentiellement dans le cas des résines vinylesters.

### FIGURES

Figure 1 : Evolution du logarithme du nombre total de CFU au cours du temps

### EXEMPLES

Afin d'illustrer la présente invention, les exemples suivants ont été réalisés. En aucun cas, l'objet de la présente invention n'est-il limité à ces seuls exemples.

### 1. Poudre à base de CuP₈

La poudre de CuP₈, dont la granulométrie n'est pas contrôlée est connue pour être utilisée dans la brasure.

De manière classique celle-ci a les caractéristiques suivantes :

| | |
|---|---|
| Composition nominale (% massique) : | Cu : 92 |
| | P : 8 |
| Point de fusion : | 710-750°C |
| Densité : | 8g/cm³ |

- Protocole de fabrication de la poudre de cupro-phosphore selon l'invention Selon la présente invention, l'alliage de cupro-phosphore contenant un pourcentage de phosphore entre 2 et 16% de préférence 8% est introduit dans le bain pour fusion. Cet alliage est ensuite atomisé à l'eau dans des conditions telles que le résultats granulométrique doit se trouver entre 8 et 150µm (D50), le taux d'oxygène est compris entre 0,3 et 5% en poids.
- La poudre suivante a été ainsi obtenue :

**Tableau 1**

| Granulométrie, % cumulé retenu (ISO4497) | | |
|---|---|---|
| Tailles particules | Pourcentages par tranche | Pourcentages cumulés retenus |
| ≥125 µm | 0,0 | 0,0 |
| ≥106 µm | 0,9 | 0,9 |
| ≥90 µm | 4,5 | 5,4 |
| ≥75 µm | 6,6 | 12,0 |
| ≥63 µm | 8,4 | 20,4 |
| ≥45 µm | 20,8 | 41,2 |
| <45 µm | 58,8 | 58,8 |
| Total | 100% | 100% (41,2+58,8) |

| | | |
|---|---|---|
| Densité obtenue: 2,67 g/cm³ (ISO3923/2) P% obtenu: 8,0% en masse | | |

### 2. Poudre de cuivre oxydé

Le même protocole que pour le cupro-phosphate a été appliqué pour le cuivre. La poudre suivante a été ainsi obtenue :

**Tableau 2 :**

| Granulométrie, % cumulé retenu (ISO4497) | | |
|---|---|---|
| Tailles particules | Pourcentages par tranche | Pourcentages cumulés retenus |
| ≥125 µm | 0,0 | 0,0 |
| ≥106 µm | 1.0 | 1.0 |
| ≥75 µm | 8.1 | 9.1 |
| ≥63 µm | 7.9 | 17,0 |
| ≥45 µm | 19.2 | 36.2 |
| <45 µm | 63.8 | 63.8 |
| Total | 100% | 100% (36,2+63,8) |

| | | |
|---|---|---|
| Densité obtenue: 2,88 g/cm³ O_{T}% : 0,35% en masse (ISO4491-4) Ensuite, la poudre obtenue est passée dans un four à bande à une température supérieure à 500°C (environ 800°C en l'occurrence) pour l'oxyder, sous atmosphère contrôlée. | | |

Une poudre avec la même granulométrie que précédemment a été obtenue avec :
densité obtenue : 1,60 g/cm³
O_{T}% : 0,08% en masse
Cu%> 99,7 %en masse

### 3. Exemple de composite/revêtements obtenus

Les composites sont simplement obtenus en mélangeant les composés entre eux.

La pose des revêtements du tableau 3 s'est faite de la manière classique suivante.

Il est d'abord procédé à un sablage ou ponçage de la surface à traiter (grain de 120). En cas de surface métallique, il est possible d'appliquer un apprêt isolant, anti corrosion, adapté selon la nature du substrat (ferreux, non-ferreux...). En cas de surface poreuse (pierre, bois...), il est possible d'appliquer un apprêt polyester en deux couches, si nécessaire avec égrenage entre les couche au grain de 120.

Il est fortement conseillé de respecter les temps de durcissement de l'apprêt polyester (environ 6h à 20°C par couche) pour que la couche mince perdure dans le temps. Il peut être ensuite procédé à un séchage actif de la pièce à l'air comprimé ou par étuvage à 25°C en cabine pendant 20 minutes. Il est possible de dégraisser la surface à traiter.

Il est tout à fait possible d'appliquer le composite au rouleau ou au pistolet (avec dans ce cas la nécessité de respecter un angle constant de projection du composite sur la surface à 90° pour un recouvrement maximale)

Le stockage du produit revêtu peut se faire dans une pièce traitée en atmosphère contrôlée à 20°C de façon idéale pendant 12 heures pour un durcissement efficace (Pour un bateau ceci est plus difficile à obtenir, c'est pourquoi des durcisseurs accélérés permettent de réaliser la catalyse jusqu'à 5°C minimum). Une fois cette période de durcissement terminée, un sablage ou ponçage au grain de 120 est effectué pour débarrasser la surface des excès d'amidon et d'oxydes et obtenir une surface lisse de métal.

**Tableau 3 :**

| | Composite 1 | Composite 2 | Composite 3 |
|---|---|---|---|
| Poudre métallique | CuP₈ (poudre exemple 1) | Cuivre oxydé (poudre exemple 2) | Cuivre oxydé (poudre exemple 2) |
| Liant (proportions en masse) | Polyester hybride 84% | Polyester hybride 84% | Vynilester, prête à l'emploi du commerce |
| | Acétone 8% | Acétone 8% | |
| | Styrène Parafiné2% | Styrène Parafiné2% | |
| | Colorant 4% | Colorant 4% | |
| Durcissant (proportions en masse) | METHYL ETHYL PEROXYDE, 2% | METHYL ETHYL PEROXYDE,2% | |
| Proportions en masse de Poudre/Liant | Poudre = 1,275 | Poudre = 1,275 | Poudre = 1 |
| | Liant = 1 | Liant = 1 | Liant = 1,5 (valeur estimée) |
| Suspension réalisable | oui | oui | oui |
| Revêtement obtenu | Par pulvérisation (possible au rouleau) | Par pulvérisation (possible au rouleau) | Par pulvérisation (possible au rouleau) |
| Temps de prise | 60 minutes | 60 minutes | 50 minutes |
| Epaisseur approximative du revêtement obtenu | 100 - 250 µm (valeur estimée) | 100 - 250 µm (valeur estimée) | 100 - 250 µm (valeur estimée) |

### 4. Exemples Biocidie

Des résultats de tests dans un laboratoire ont montré que les revêtements présentaient des propriétés de biocidie remarquables :

**Tableau 4 : Décompte moyens de CFU sur Metalskin medical vs témoins ; Analyse sur valeurs Brutes (Hors traitement/surface de prélevement)**

| | Décompte CFU Moyen/Eléments témoins (amplitude) | Décompte CFU Moyen/Eléments MetalSkin (amplitude) | % Décompte MétalSkin/Décompte sur Témoin (amplitude) | Test Wilcoxon Valeur P | Test Mann-Whitney Valeur P |
|---|---|---|---|---|---|
| Poignée de porte (couloir) | 6 (0-17) | 0 (0-10) | 0% (0-233) | 0,02524 | 0,00964 |
| Poignée de porte (Chambre) | 6 (0-18) | 0 (0-9) | 0% (0-300) | 0,00014 | 0,00002 |
| Interrupteur Entrée Chambre | 8 (0-16) | 0 (0-10) | 0% (0-350) | 0,00008 | 0,00002 |
| Barre d'Appui Douche | 13 (0-44) | 8 (0-25) | 61% (3-300) | 0,00291 | 0,00449 |
| Abattant WC | 7 (0-31) | 0 (0-12) | 0% (0-1200) | 0,19863 | 0,23713 |
| Robinet Mitigeur | 9 (0-20) | 6 0-18) | 73% (0-480) | 0,00646 | 0,02163 |
| Plateau Adaptable | 10 (0-21) | 0 (0-10) | 0% (0-450) | 0,00046 | 0,00009 |

Ainsi, les revêtements obtenus selon la présente invention démontrent leurs propriétés biocides (dont antimicrobiologiques) dans divers cas d'utilisations, que ce soit à l'état sec ou en présence de fluides tel que l'eau.

### 5. Etude d'un composite cuivré dans la réduction de portage bactériens des éléments de chambre en chirurgie orthopédique dans une clinique

### 5.1. Introduction

En France, les infections nosocomiales sont une source importante de morbidité et de mortalité. Près de 4200 décès par an leur sont imputables. Le surcoût généré par ces infections est évalué entre 2.4 et 6 milliards d'euros par an, notamment à cause de l'allongement de la durée d'hospitalisation, du traitement antibiotique, des examens de laboratoire et de la surveillance de l'infection.

On sait qu'environ 30% des infections nosocomiales pourraient être évitées par des mesures d'hygiène appropriées y compris le lavage des mains. La place de l'environnement dans le processus infectieux semble, du moins pour certains germes, prouvé. Les travaux réalisés se sont plutôt intéressés aux objets touchés fréquemment par les mains, et donc qui deviennent des éléments de propagation de l'infection.

Les mesures de propreté habituelles semblent insuffisantes pour assurer cette hygiène, d'autant plus que certains germes restent présents longtemps et après le nettoyage (ceci notamment pour le staphylocoque doré).

Parmi les mesures proposées pour diminuer le portage bactérien, on retrouve l'utilisation de produits actifs tels que le peroxyde d'hydrogène, mais aussi l'utilisation de matériaux antimicrobiens pour les surfaces les plus fréquemment utilisées (poignées de porte, abattant WC, robinets, interrupteurs...). L'application d'un matériau antimicrobien sur ces surfaces peut aider à réduire ces contaminations croisées. Un des produits bactéricides reconnu est le cuivre qui, in vitro, tue beaucoup de microorganismes dont *Escherichia coli, Staphylococcus aureus* résistant à la méthicilline, *Listeria monocytogenes,* le virus influenza A ou encore *C. difficile.* Des produits à base de cuivre semblent montrer des résultats intéressants in vitro et les études de Sasahara et Casey mettent en évidence une diminution significative des bactéries sur les surfaces traitées par le cuivre.

Cependant, le coût du cuivre massif et le nombre important de lieux ou objets à traiter rend la généralisation de leur utilisation peu probable ou trop couteuse.

Il a été mis au point un composite cuivré selon la présente invention permettant de revêtir des poignées, robinets et autre matériel à un coût réduit compte tenu de la faible épaisseur (200 microns) en cuivre.

Le but de cette étude est de montrer l'efficacité de ce nouveau produit dans l'activité antibactérienne au sein de chambres recevant des patients opérés pour chirurgie orthopédique.

### 5.2. Méthodes

### 5.2.1 Protocole clinique

L'alliage du produit utilisé est cupro-phosphoré, avec 95% de cuivre. Ce produit a permis de revêtir les objets les plus fréquemment utilisés et touchés par les mains en chambre clinique.

L'expérience a concerné 6 chambres du service de chirurgie orthopédique de la clinique Saint Roch à Montpellier (France). Parmi ces 6 chambres, 3 tirées aléatoirement ont été équipées avec le produit cuivré. Les éléments concernés dans chaque chambre traitée sont au nombre de 7 : deux béquilles de poignées de porte (interne/externe), un interrupteur, un plateau adaptable, un abattant de WC, une barre d'appui dans la douche et un robinet mitigeur.
Les 3 autres chambres ont conservé le matériel habituel et ont donc constitué le groupe témoin.

L'étude a duré 8 semaines. Des prélèvements ont été réalisés tous les lundis, mercredis, jeudis et vendredis, dans chacune des 6 chambres, et sur chacun des 7 éléments concernés. Le nombre total de prélèvements s'élève donc à 1344.

Pour les semaines 5 à 8, deux chambres ont subi une permutation : une chambre traitée est devenue témoin et une chambre témoin est devenue traitée. Le schéma du plan d'expérience est donc le suivant :

**Tableau 5. : Schéma du plan d'expérience**

| | **Chambre 1** | **Chambre 2** | **Chambre 3** | **Chambre 4** | **Chambre 5** | **Chambre 6** |
|---|---|---|---|---|---|---|
| **Semaines 1 à 4** | Témoin | Témoin | Témoin | Traitée | Traitée | Traitée |
| **Semaines 5 à 8** | Témoin | Traitée | Témoin | Témoin | Traitée | Traitée |

### 5.2.2. Méthodologie microbiologique et prélèvements

Le prélèvement est réalisé sur tampon imbibé d'une solution stérile au moyen d'un gabarit stérile. Un frottement est exécuté 15 fois dans chaque sens. Ensuite les tampons sont immergés dans une solution neutralisante, puis centrifugés et mis en incubation à 37° C pendant 48 heures. Le gabarit de prélèvement est stérile.

Un comptage et une identification sont par la suite réalisés.

Décompte des germes : un seul laboratoire [...] a réalisé le décompte des germes.

Ce dernier a été réalisé en tenant compte d'un seuil de positivité. En dessous de 5 CFU par surface de 25 cm² ; le décompte est considéré comme nul.

Afin de standardiser les surfaces de calcul, cette dernière a été ramenée à 100 cm2 pour tous les lieux de prélèvements. Ainsi, les décomptes sur les béquilles de porte et la barre d'appui ont été multipliés par 8 et sur les autres lieux multipliés par 4. En effet, pour l'abattant de WC, le plateau adaptable, l'interrupteur et les robinets mitigeurs la surface est de 25 cm2 tandis que pour les béquilles de porte et la barre d'appui elle est de 12,5 cm2.

Une fois par jour, les chambres sont nettoyées. Le nettoyage a lieu habituellement entre 9 et 10 heures du matin. Tous les prélèvements ont quant à eux été réalisés après 16 heures (entre 16h et 17h le plus souvent). Les horaires exacts de nettoyage des chambres ont été recueillis, ainsi que ceux des prélèvements. Le délai entre nettoyage et prélèvements a de ce fait pu être calculé.

### 5.2.3. Méthodes statistiques

### 5.2.3.1. Calcul du nombre de prélèvements nécessaires

Il a été fait sur chaque élément puisque le but est de comparer la moyenne des nombres de bactéries (galerie d'identification : Biomérieux) totales sur chaque site de prélèvement entre le groupe de chambres témoins et le groupe de chambres traitées. Pour calculer le nombre de prélèvements nécessaires, nous avons émis l'hypothèse que nos résultats seraient voisins de ceux obtenus dans l'étude de « BIRMINGHAM ».

Si on raisonne en moyenne de CFU globalement entre les chambres traitées et les chambres témoins dans l'étude de BIRMINGHAM, pour les dessus d'abattants de WC on passe de 2190 cfu à 6 en moyenne, ceci avec une grande variabilité (dans l'étude de BIRMINGHAM il y a eu seulement 200 échantillons). Mais ces abattants WC étaient très contaminés.

Nous pensons donc trouver en moyenne de 6 à 15 éléments sur chaque site chez les témoins et de 1 à 8 chez les éléments préparés. Soit un écart minimal moyen entre 9 et 7 ceci avec un écart type variant entre 2 et 5.

En se plaçant dans le cas moyen (écart type=4) ceci conduit à :
84 prélèvements sur chaque site (poignée...) et par groupe de chambres (écart moyen=2) et avec 10% de données ininterprétables à 94 prélèvements par groupe de chambres.

Or par site de prélèvements, nous avons prévu 48 prélèvements les 4 premières semaines (par groupe de chambres) et 48 les 4 semaines suivantes soit un total de 96. Donc le nombre prévu devrait suffire pour répondre à la question posée et ceci sur tous les sites.

### 5.2.3.2. Analyses statistiques

Le nombre total de CFU, tous lieux de prélèvements confondus, a tout d'abord été comparé entre les deux groupes de chambres. Puis, les mêmes comparaisons ont été faites par lieu de prélèvement (7 lieux).
Une comparaison du nombre de colonies de *Staphylococcus aureus* (± microcoques ± bacillus) entre chambres traitées et chambre témoins a ensuite été réalisée, tous lieux de prélèvements confondus dans un premier temps, et lieu par lieu dans un second temps. Le délai entre le nettoyage et les prélèvements a également été comparé entre groupes de chambres.
Le test non paramétrique de Wilcoxon-Mann-Whitney (Mann-Whitney U test) a été utilisé pour toutes les comparaisons.
Les semaines 1 à 4 et 5 à 8 ont été différenciées tout au long de l'analyse (car 2 chambres permutées). Pour le cas apparié (sur 8 semaines), les résultats ne sont pas présentés, le manque de puissance étant trop important (seulement 4 chambres restantes).
L'évolution temporelle du logarithme du nombre total de microorganismes a enfin été étudiée, à l'aide d'un modèle mixte à mesures répétées. En effet, une transformation logarithmique a été effectuée en raison de la non-vérification de l'hypothèse de la normalité, nécessaire à la réalisation du modèle mixte.
Toutes les analyses statistiques ont été réalisées avec SAS software 9.3, SAS Institute Inc, Cary, NC, USA par l'équipe EA 2415 de Biostatistique et d'Epidémiologie de l'Université Montpellier I.

### 5.3. Résultats

### 5.3.1. Semaines 1 à 4

Le délai entre nettoyage et prélèvements a tout d'abord été comparé dans les deux groupes de chambres, ceci afin d'éliminer cette variable de confusion. Ce délai n'apparait pas statistiquement différent entre groupes de chambres, ni semaine par semaine, ni sur la totalité des quatre premières semaines (Tableau 6). La médiane du délai varie entre 4 et 6 heures.

**Tableau 6 : Délai entre le nettoyage et les prélèvements - Semaines 1 à 4**

| | *Ensemble des chambres N*=*6* | *Cas N*=*3* | *Témoins N*=*3* | *P value* |
|---|---|---|---|---|
| **Délai nettoyage-prélèvements S1** | | | | |
| Moyenne (STD) | 5.28 (1.04) | 5.73 (0.74) | 4.84 (1.25) | 0.6625 |
| Médiane (Min ; Max) | 5.48 (3.86 ; 6.25) | 6.08 (4.88 ; 6.22) | 4.42 (3.86 ; 6.25) | |

| **Délai nettoyage-prélèvements S2** | | | | |
|---|---|---|---|---|
| Moyenne (STD) | 4.28 (0.58) | 4.45 (0.86) | 4.1 (0.17) | 1.0000 |
| Médiane (Min ; Max) | 4.04 (3.9 ; 5.44) | 4.02 (3.9 ; 5.44) | 4.07 (3.96 ; 4.29) | |

| **Délai nettoyage-prélèvements S3** | | | | |
|---|---|---|---|---|
| Moyenne (STD) | 4.91 (0.92) | 5.35 (0.5) | 4.47 (1.14) | 0.3827 |
| Médiane (Min ; Max) | 5.11 (3.19 ; 5.79) | 5.46 (4.81 ; 5.79) | 4.86 (3.19 ; 5.35) | |

| **Délai nettoyage-prélèvements S4** | | | | |
|---|---|---|---|---|
| Moyenne (STD) | 4.79 (0.63) | 4.91 (0.45) | 4.68 (0.86) | 1.0000 |
| Médiane (Min ; Max) | 4.96 (3.71 ; 5.36) | 4.96 (4.44 ; 5.33) | 4.96 (3.71 ; 5.36) | |

| **Délai nettoyage-prélèvements S1S4** | | | | |
|---|---|---|---|---|
| Moyenne (STD) | 4.82 (0.52) | 5.11 (0.56) | 4.52 (0.34) | 0.3827 |
| Médiane (Min ; Max) | 4.72 (4.13 ; 5.6) | 5.22 (4.51 ; 5.6) | 4.72 (4.13 ; 4.72) | |

Le tableau 7 présente les résultats dans les trois chambres traitées et les trois chambres non traitées pour les semaines 1 à 4 en cumulatif. Globalement, une tendance à la significativité (test non paramétrique) est notée (p=0.0809) avec une moyenne de colonies bactériennes de 685 (médiane à 685) dans le groupe traité et de 1091 (médiane à 1058) dans le groupe non traité. Cette tendance est due à celle constatée lors de la deuxième semaine, cependant, pour les autres semaines, une diminution de près de 50% de la médiane du nombre de colonies de microorganismes est retrouvée, ainsi qu'une diminution de plus de 1/3 de la valeur moyenne.

**Tableau 7 : Nombre total de CFU - Semaines 1 à 4**

| | *Ensemble des chambres N*=*6* | *Cas N*=*3* | *Témoins N*=*3* | *P value* |
|---|---|---|---|---|
| **Total CFU S1** | | | | |
| Moyenne (STD) | 247.33 (89.32) | 195.67 (85) | 299 (68.64) | 0.3827 |
| Médiane (Min ; Max) | 259.5 (111 ; 378) | 195 (111 ; 281) | 265 (254 ; 378) | |
| **Total CFU S2** | | | | |
| Moyenne (STD) | 224.5 (104.36) | 145.33 (46) | 303.67 (79.43) | **0.0809** |
| Médiane (Min ; Max) | 202 (99 ; 361) | 146 (99 ; 191) | 337 (213 ; 361) | |
| **Total CFU S3** | | | | |
| Moyenne (STD) | 202.5 (69.14) | 160.67 (79.73) | 244.33 (18.56) | 0.3827 |
| Médiane (Min ; Max) | 235.5 (105 ; 262) | 125 (105 ; 252) | 246 (225 ; 262) | |
| **Total CFU S4** | | | | |
| Moyenne (STD) | 214 (72.47) | 183.33 (70.12) | 244.67 (73.42) | 0.3827 |
| Médiane (Min ; Max) | 203.5 (131 ; 327) | 156 (131 ; 263) | 221 (186; 327) | |
| **Total CFU S1S4** | | | | |
| Moyenne (STD) | 888.33 (228.49) | 685 (23) | 1091.67 (77.22) | **0.0809** |
| Médiane (Min ; Max) | 872.5 (662 ; 1180) | 685 (662 ; 708) | 1058 (1037 ; 1180) | |

Le nombre total de CFU sur les semaines 1 à 4 a ensuite été analysé par lieu de prélèvement (poignée interne, externe, interrupteur...). Une tendance à la significativité est observée en faveur des lieux traités pour la poignée externe de porte (p=0.0765), l'interrupteur (p=0.0809) et le plateau adaptable (p=0.0809) (Tableau 8). Le manque de puissance explique la non significativité pour la poignée interne. Pour les autres éléments, les valeurs sont bien inférieures dans le groupe des chambres traitées, mais pas de manière interprétable.

**Tableau 8 : Nombre total de CFU par lieu de prélèvement - semaines 1 à 4**

| | *Ensemble des chambres N*=*6* | *Cas N*=*3* | *Témoins N*=*3* | *P value* |
|---|---|---|---|---|
| **CFU Poignée interne S1S4** | | | | |
| Moyenne (STD) | 62.33 (36.96) | 36.33 (12.1) | 88.33 (35.23) | 0.1904 |
| Médiane (Min ; Max) | 49.5 (27 ; 117) | 32 (27 ; 50) | 99 (49 ; 117) | |

| **CFU Poignée externe S1S4** | | | | |
|---|---|---|---|---|
| Moyenne (STD) | 87.33 (30.27) | 60.33 (10.12) | 114.33 (1.15) | **0.0765** |
| Médiane (Min ; Max) | 92.5 (54 ; 115) | 55 (54 ; 72) | 115 (113 ; 115) | |

| **CFU Interrupteur S1S4** | | | | |
|---|---|---|---|---|
| Moyenne (STD) | 70.17 (31.17) | 48 (26.46) | 92.33 (15.95) | **0.0809** |
| Médiane (Min ; Max) | 73.5 (18 ; 110) | 58 (18 ; 68) | 88 (79 ; 110) | |

| **CFU Plateau S1S4** | | | | |
|---|---|---|---|---|
| Moyenne (STD) | 134 (67.04) | 85.67 (30.27) | 182.33 (57.55) | **0.0809** |
| Médiane (Min ; Max) | 126 (58 ; 246) | 81 (58 ; 118) | 167 (134 ; 246) | |

| **CFU WC S1S4** | | | | |
|---|---|---|---|---|
| Moyenne (STD) | 118 (37.14) | 116.33 (11.37) | 119.67 (57.54) | 1.0000 |
| Médiane (Min ; Max) | 117.5 (61 ; 176) | 113 (107 ; 129) | 122 (61 ; 176) | |

| **CFU Douche S1S4** | | | | |
|---|---|---|---|---|
| Moyenne (STD) | 251.33 (91.37) | 200 (49.76) | 302.67 (102.42) | 0.3827 |
| Médiane (Min ; Max) | 227 (146 ; 410) | 210 (146 ; 244) | 292 (206 ; 410) | |

| **CFU Robinet S1S4** | | | | |
|---|---|---|---|---|
| Moyenne (STD) | 165.17 (48.35) | 138.33 (37.1) | 192 (48.03) | 0.3827 |
| Médiane (Min ; Max) | 158.5 (98 ; 239) | 146 (98 ; 171) | 194 (143 ; 239) | |

Le nombre de colonies de *Staphylococcus aureus* (± microcoques ± bacillus) a été plus particulièrement étudié.

Concernant le compte total de colonies, les seules tendances à la significativité (bien que le compte soit toujours largement inférieur dans les chambres traitées par rapport aux non traitées) concernent la globalité des semaines 1 à 4 (p=0.0765, en moyenne 424 vs 782 et en médiane 470 vs 783) et la semaine 3 (p=0.0809, médiane à 108 pour les chambres traitées vs 196 pour les non traitées, ou encore moyenne à 110 pour les chambres traitées vs 199 pour les non traitées) (Tableau 9).

**Tableau 9 : Nombre de colonies de Staphylococcus aureus (± microcoques ± bacillus) - semaines 1 à 4**

| | *Ensemble des chambres N*=*6* | *Cas N*=*3* | *Témoins N*=*3* | *P value* |
|---|---|---|---|---|
| **Total Staph S1** | | | | |
| Moyenne (STD) | 175.5 (61.59) | 142.67 (69.28) | 208.33 (38.08) | 0.3827 |
| Médiane (Min ; Max) | 186.5 (67 ; 252) | 158 (67 ; 203) | 191 (182 ; 252) | |

| **Total Staph S2** | | | | |
|---|---|---|---|---|
| Moyenne (STD) | 156.5 (90.52) | 101.33 (57.36) | 211.67 (89.8) | 0.1904 |
| Médiane (Min ; Max) | 156.5 (61 ; 314) | 76 (61 ; 167) | 175 (146 ; 314) | |

| **Total Staph S3** | | | | |
|---|---|---|---|---|
| Moyenne (STD) | 154.67 (55.42) | 110 (40.04) | 199.33 (9.45) | **0.0809** |
| Médiane (Min ; Max) | 171.5 (71 ; 210) | 108 (71 ; 151) | 196 (192 ; 210) | |

| | *Ensemble des chambres N*=*6* | *Cas N*=*3* | *Témoins N*=*3* | *P value* |
|---|---|---|---|---|
| **Total Staph S4** | | | | |
| Moyenne (STD) | 116(71.17) | 69.67 (38.37) | 162.33 (68.92) | 0.1904 |
| Médiane (Min ; Max) | 92 (26; 220) | 85 (26 ; 98) | 181 (86; 220) | |

| **Total Staph S1S4** | | | | |
|---|---|---|---|---|
| Moyenne (STD) | 602.67 (203.07) | 423.67 (80.25) | 781.67 (23.03) | **0.0765** |
| Médiane (Min ; Max) | 614 (331 ; 804) | 470 (331 ; 470) | 783 (758 ; 804) | |

Lorsque la comparaison du nombre de colonies de *Staphylococcus aureus* (± microcoques ± bacillus) est faite par lieu de prélèvement, une tendance à la significativité est relevée pour la poignée externe (p=0.0809), l'interrupteur (p=0.0809), le plateau adaptable (p=0.0809) et le robinet (p=0.0809) (Tableau 10). Les valeurs pour ces localisations sont nettement inférieures sur les lieux traités. Pour les autres localisations, les valeurs sont toujours inférieures sur les lieux traités mais sont non significatives par manque de puissance.

**Tableau 10 : Nombre de colonies de Staphylococcus aureus (± microcoques ± bacillus) par lieu de prélèvement - semaines 1 à 4**

| | *Ensemble des chambres N*=*6* | *Cas N*=*3* | *Témoins N*=*3* | *P value* |
|---|---|---|---|---|
| **Staph Poignée interne S1S4** | | | | |
| Moyenne (STD) | 40.17 (26.89) | 23.33 (10.97) | 57 (28.93) | 0.1840 |
| Médiane (Min ; Max) | 30 (17; 78) | 17 (17 ; 36) | 69 (24 ; 78) | |
| **Staph Poignée externe S1S4** | | | | |
| Moyenne (STD) | 64.67 (26.63) | 41.67 (8.96) | 87.67 (10.26) | **0.0809** |
| Médiane (Min ; Max) | 65.5 (36 ; 99) | 37 (36 ; 52) | 85 (79 ; 99) | |
| **Staph Interrupteur S1S4** | | | | |
| Moyenne (STD) | 43.17 (24.81) | 23 (14.73) | 63.33 (10.07) | **0.0809** |
| Médiane (Min ; Max) | 47 (14 ; 74) | 15 (14 ; 40) | 62 (54 ; 74) | |
| **Staph Plateau S1S4** | | | | |
| Moyenne (STD) | 90.33 (64.67) | 37 (17.78) | 143.67 (40.07) | **0.0809** |
| Médiane (Min ; Max) | 85 (23 ; 189) | 31 (23 ; 57) | 129 (113 ; 189) | |
| **Staph WC S1S4** | | | | |
| Moyenne (STD) | 74.83 (38.04) | 57.33 (21.78) | 92.33 (47.17) | 0.3827 |
| Médiane (Min ; Max) | 69.5 (33 ; 137) | 64 (33 ; 75) | 97 (43 ; 137) | |
| **Saph Douche S1S4** | | | | |
| Moyenne (STD) | 169 (48.53) | 144 (38.74) | 194 (50.12) | 0.3827 |
| Médiane (Min ; Max) | 166 (100 ; 242) | 159 (100 ; 173) | 198 (142 ; 242) | |
| **Staph Robinet S1S4** | | | | |
| Moyenne (STD) | 120.5 (32.69) | 97.33 (10.26) | 143.67 (30.92) | **0.0809** |
| Médiane (Min ; Max) | 112 (86 ; 178) | 100 (86 ; 106) | 135 (118 ; 178) | |

### 5.3.2. Semaines 5 à 8

Les mêmes analyses ont été réitérées pour les semaines 5 à 8.

Les délais entre nettoyage et prélèvements sont tous largement non significatifs que ce soit semaine par semaine ou sur la totalité des quatre dernières semaines (4.93 heures en médiane pour les chambres traitées versus 4.77 heures pour les non traitées) (Tableau 11).

**Tableau 11 : Délai entre le nettoyage et les prélèvements - Semaines 1 à 4**

| | *Ensemble des chambres N*=*6* | *Cas N*=*3* | *Témoins N*=*3* | *P value* |
|---|---|---|---|---|
| **Délai nettoyage-prélèvements S5** | | | | |
| Moyenne (STD) | 4.9 (0.46) | 5.06 (0.33) | 4.74 (0.58) | 0.6625 |
| Médiane (Min ; Max) | 4.91 (4.38 ; 5.42) | 5.1 (4.71 ; 5.35) | 4.44 (4.38 ; 5.42) | |
| **Délai nettoyage-prélèvements S6** | | | | |
| Moyenne (STD) | 4.71 (0.42) | 4.67 (0.06) | 4.75 (0.66) | 0.6625 |
| Médiane (Min ; Max) | 4.71 (4 ; 5.24) | 4.69 (4.6 ; 4.73) | 5 (4 ; 5.24) | |
| **Délai nettoyage-prélèvements S7** | | | | |
| Moyenne (STD) | 5.26 (0.72) | 5.15 (0.58) | 5.38 (0.95) | 1.0000 |
| Médiane (Min ; Max) | 4.86 (4.73 ; 6.48) | 4.89 (4.73 ; 5.81) | 4.83 (4.82 ; 6.48) | |
| **Délai nettoyage-prélèvements S8** | | | | |
| Moyenne (STD) | 4.64 (0.49) | 4.84 (0.1) | 4.44 (0.69) | 0.6625 |
| Médiane (Min ; Max) | 4.79 (3.65 ; 4.96) | 4.79 (4.77 ; 4.96) | 4.79 (3.65 ; 4.89) | |
| | | | | |
| **Délai nettoyage-prélèvements S5S8** | | | | |
| Moyenne (STD) | 4.88(0.41) | 4.93 (0.12) | 4.83 (0.63) | 0.6625 |
| Médiane (Min ; Max) | 4.87 (4.23 ; 5.48) | 4.93 (4.81 ; 5.05) | 4.77 (4.23 ; 5.48) | |

Pour le nombre total de colonies de microorganismes, la comparaison entre groupes montre une tendance à la significativité pour la semaine 8, ainsi que globalement sur le cumul des semaines 5 à 8 (=0.0809). Les chambres traitées présentent en médiane 571 colonies contre 1056 pour les chambres témoins (Tableau 12).

**Tableau 12 : Nombre total de CFU - Semaines 5 à 8**

| | *Ensemble des chambres N*=*6* | *Cas N*=*3* | *Témoins N*=*3* | *P value* |
|---|---|---|---|---|
| **Total CFU S5** | | | | |
| Moyenne (STD) | 252.33 (151.12) | 164.67 (87.23) | 340 (162.56) | 0.1904 |
| Médiane (Min ; Max) | 234 (74 ; 525) | 172 (74 ; 248) | 275 (220 ; 525) | |
| **Total CFU S6** | | | | |
| Moyenne (STD) | 178.33 (59.92) | 148.33 (33.95) | 208.33 (71.58) | 0.1904 |
| Médiane (Min ; Max) | 165 (118 ; 286) | 142 (118 ; 185) | 194 (145 ; 286) | |
| **Total CFU S7** | | | | |
| Moyenne (STD) | 221.83 (112.4) | 160.33 (68.63) | 283.33 (124.62) | 0.3827 |
| Médiane (Min ; Max) | 199 (83 ; 366) | 184 (83 ; 214) | 344 (140 ; 366) | |
| **Total CFU S8** | | | | |
| Moyenne (STD) | 152.33 (66.79) | 94 (16.37) | 210.67 (26.03) | **0.0809** |
| Médiane (Min ; Max) | 146 (76 ; 236) | 98 (76 ; 108) | 212 (184 ; 236) | |
| **Total CFU S5S8** | | | | |
| Moyenne (STD) | 804.83 (264.04) | 567.33 (60.58) | 1042.33 (37.42) | **0.0809** |
| Médiane (Min ; Max) | 813 (505 ; 1071) | 571 (505 ; 626) | 1056 (1000 ; 1071) | |

Selon le lieu de prélèvement, une tendance à la significativité en faveur des lieux traités est constatée pour la poignée interne (p=0.0809), l'interrupteur (p=0.0809), l'abattant de WC (p=0.0809) et la barre d'appui de la douche (p=0.0765) (Tableau 13). Dans tous les cas, il y a en moyenne et médiane beaucoup moins de colonies de microorganismes dans les lieux traités ; le manque de puissance expliquant la non significativité.

**Tableau 13 : Nombre total de CFU par lieu de prélèvement - semaines 5 à 8**

| | *Ensemble des chambres N*=*6* | *Cas N*=*3* | *Témoins N*=*3* | *P value* |
|---|---|---|---|---|
| **CFU Poignée interne S5S8** | | | | |
| Moyenne (STD) | 90.33 (50.73) | 45 (14) | 135.67 (8.5) | **0.0809** |
| Médiane (Min ; Max) | 94 (35 ; 144) | 39 (35 ; 61) | 136 (127 ; 144) | |

| **CFU Poignée externe S5S8** | | | | |
|---|---|---|---|---|
| Moyenne (STD) | 92.83 (27.72) | 74.67 (25.7) | 111 (16.46) | 0.2683 |
| Médiane (Min ; Max) | 101.5 (51 ; 130) | 71 (51 ; 102) | 102 (101 ; 130) | |

| **CFU Interrupteur S5S8** | | | | |
|---|---|---|---|---|
| Moyenne (STD) | 119 (56.72) | 78.67 (32.15) | 159.33 (46.14) | **0.0809** |
| Médiane (Min ; Max) | 114 (42 ; 212) | 92 (42 ; 102) | 140 (126 ; 212) | |

| **CFU Plateau S5S8** | | | | |
|---|---|---|---|---|
| Moyenne (STD) | 135.83 (59.45) | 99.33 (32.81) | 172.33 (61.34) | 0.1904 |
| Médiane (Min ; Max) | 121.5 (77 ; 227) | 84 (77 ; 137) | 184 (106 ; 227) | |

| **CFU WC S5S8** | | | | |
|---|---|---|---|---|
| Moyenne (STD) | 74 (35.95) | 45 (18.08) | 103 (19.52) | **0.0809** |
| Médiane (Min ; Max) | 72.5 (26 ; 122) | 47 (26 ; 62) | 104 (83 ; 122) | |

| **CFU Douche S5S8** | | | | |
|---|---|---|---|---|
| Moyenne (STD) | 174.33 (51.11) | 128.33 (2.31) | 220.33 (13.32) | **0.0765** |
| Médiane (Min ; Max) | 170 (127 ; 235) | 127 (127 ; 131) | 217 (209 ; 235) | |

| **CFU Robinet S5S8** | | | | |
|---|---|---|---|---|
| Moyenne (STD) | 126.67 (60.66) | 97.33 (10.12) | 156 (80.72) | 0.6625 |
| Médiane (Min ; Max) | 100.5 (66 ; 222) | 92 (91 ; 109) | 180 (66 ; 222) | |

Concernant le nombre de colonies de *Staphylococcus aureus* (± microcoques ± bacillus), une tendance à la significativité est notée pour la semaine 8 (p=0.0765) ainsi que pour la globalité des semaines 5 à 8 (p=0.0809), avec environ moitié moins de colonies dans les chambres traitées (médiane à 433 pour les chambres traitées et à 849 pour les témoins) (Tableau 14).

**Tableau 14 : Nombre de colonies de Staphylococcus aureus (± microcoques ± bacillus) - semaines 5 à 8**

| | *Ensemble des chambres N*=*6* | *Cas N*=*3* | *Témoins N*=*3* | *P value* |
|---|---|---|---|---|
| **Total Staph S5** | | | | |
| Moyenne (STD) | 197.67 (134.32) | 127.67 (75.37) | 267.67 (157.24) | 0.3827 |
| Médiane (Min ; Max) | 177 (57 ; 449) | 119 (57 ; 207) | 185 (169 ; 449) | |
| | | | | |

| **Total Staph S6** | | | | |
|---|---|---|---|---|
| Moyenne (STD) | 125.83 (51.62) | 103 (26.85) | 148.67 (66.16) | 0.3827 |
| Médiane (Min ; Max) | 117.5 (74 ; 212) | 108 (74 ; 127) | 154 (80 ; 212) | |

| **Total Staph S7** | | | | |
|---|---|---|---|---|
| Moyenne (STD) | 188.83 (96.09) | 135.33 (65.25) | 242.33 (101.19) | 0.3827 |
| Médiane (Min ; Max) | 171 (64 ; 310) | 150 (64 ; 192) | 291 (126 ; 310) | |

| **Total Staph S8** | | | | |
|---|---|---|---|---|
| Moyenne (STD) | 98.83 (50.6) | 54 (5.2) | 143.67 (18.56) | **0.0765** |

| | *Ensemble des chambres N*=*6* | *Cas N*=*3* | *Témoins N*=*3* | *P value* |
|---|---|---|---|---|
| Médiane (Min ; Max) | 91.5 (48 ; 163) | 57 (48 ; 57) | 142 (126 ; 163) | |

| **Total Staph S5S8** | | | | |
|---|---|---|---|---|
| Moyenne (STD) | 611.17 (220.42) | 420 (66.46) | 802.33 (86.08) | **0.0809** |
| Médiane (Min ; Max) | 591 (348 ; 855) | 433 (348 ; 479) | 849 (703 ; 855) | |

Lorsque la comparaison du nombre de colonies de *Staphylococcus aureus* (± microcoques ± bacillus) est faite par lieu de prélèvement, une tendance à la significativité est relevée pour la poignée interne (p=0.0809), l'interrupteur (p=0.0809), l'abattant de WC (p=0.0809) et la barre d'appui dans la douche (p=0.0809) (Tableau 15). Les valeurs pour ces localisations sont nettement inférieures sur les lieux traités. Pour les autres localisations, il y a également une diminution importante dans le sens des lieux traités par rapport aux non traités mais la différence n'apparait pas significative par manque de puissance.

**Tableau 15 : Nombre de colonies de Staphylococcus aureus (± microcoques ± bacillus) par lieu de prélèvement - semaines 5 à 8**

| | *Ensemble des chambres N*=*6* | *Cas N*=*3* | *Témoins N*=*3* | *P value* |
|---|---|---|---|---|
| **Staph Poignée interne S5S8** | | | | |
| Moyenne (STD) | 63.83 (41.73) | 29 (11.53) | 98.67 (24.11) | **0.0809** |
| Médiane (Min ; Max) | 57 (16 ; 124) | 33 (16 ; 38) | 96 (76 ; 124) | |

| **Staph Poignée externe S5S8** | | | | |
|---|---|---|---|---|
| Moyenne (STD) | 67 (25.22) | 50.33 (18.23) | 83.67 (20.6) | 0.1904 |
| Médiane (Min ; Max) | 69 (34 ; 107) | 47 (34 ; 70) | 76 (68 ; 107) | |

| **Staph Interrupteur S5S8** | | | | |
|---|---|---|---|---|
| Moyenne (STD) | 97.67 (48.63) | 68.33 (32.13) | 127 (47.95) | **0.0809** |
| Médiane (Min ; Max) | 93.5 (32 ; 182) | 80 (32 ; 93) | 105 (94 ; 182) | |

| | *Ensemble des chambres N*=*6* | *Cas N*=*3* | *Témoins N*=*3* | *P value* |
|---|---|---|---|---|
| **Staph Plateau S5S8** | | | | |
| Moyenne (STD) | 103.5 (42.66) | 83.67 (37.42) | 123.33 (44.38) | 0.1904 |
| Médiane (Min ; Max) | 100 (55 ; 160) | 70 (55 ; 126) | 136 (74 ; 160) | |

| **Staph WC S5S8** | | | | |
|---|---|---|---|---|
| Moyenne (STD) | 57.33 (38.89) | 29.67 (15.28) | 85 (35.37) | **0.0809** |
| Médiane (Min ; Max) | 44.5 (13 ; 115) | 33 (13 ; 43) | 94 (46 ; 115) | |

| **Staph Douche S5S8** | | | | |
|---|---|---|---|---|
| Moyenne (STD) | 127.5 (42.7) | 90.33 (18.56) | 164.67 (8.39) | **0.0809** |
| Médiane (Min ; Max) | 131.5 (71 ; 170) | 92 (71 ; 108) | 169 (155 ; 170) | |

| **Staph Robinet S5S8** | | | | |
|---|---|---|---|---|
| Moyenne (STD) | 94.33 (54.54) | 68.67 (16.04) | 120 (72.13) | 0.6625 |
| Médiane (Min ; Max) | 77 (43 ; 186) | 70 (52 ; 84) | 131 (43 ; 186) | |

Enfin, l'analyse de l'évolution temporelle du logarithme du nombre total de microorganismes dans les 6 chambres concernées par l'expérimentation montre une tendance nette (p=0.07) à la diminution au cours des 8 semaines (Tableau 16, Figure 1).

**Tableau 16 : Modèle mixte à mesures répétées du logarithme népérien du nombre total de CFU**

| *Effect* | *Estimate* | *Standard Error* | *D F* | *t Value* | *Pr >* \|*t*\| |
|---|---|---|---|---|---|
| ***temps*** | -0.0476 1 | 0.02569 | 41 | -1.85 | **0.071 0** |

La Figure 1 expose l'évolution du logarithme du nombre total de CFU au cours du temps

### 5.4. Discussion et conclusion

L'étude de Noyce et al. (Appl Environ Microbiol 2006; 72:4239-4244) est expérimentale sur trois souches de *Staphylococcus aureus.* Sur les surfaces recouvertes de cuivre, à 22°C, ces trois souches sont tuées à 45, 60 et 90 minutes respectivement. Sur les surfaces recouvertes d'acier inoxydable, à 22°C et après 72 heures, des colonies vivantes sont retrouvées pour les trois souches de *Staphylococcus aureus.* Les auteurs trouvent également que, à 4°C, les colonies microbiennes sont totalement détruites après 6 heures.

En utilisant la méthode de Noyce, Wheeldon et al. (Appl Environ Microbiol 2007; 73:2748-2750 ; .J Antimicrob Chemother 2008; 62:522-525) comparent l'effet d'une préparation de cuivre par rapport à celle en acier inoxydable sur la contamination par *Clostridium difficile* NCTC 11204 et *Clostridium difficile* 027 R20291. L'acier inoxydable ne montre pas d'activité antimicrobienne contre les cellules végétatives de *C difficile* après 30 minutes d'exposition (pas de réduction d'activité à 3 heures). Par contre, le cuivre a une activité antimicrobienne (p<0.05) contre les cellules végétatives de *C*. *difficile,* ceci dès 60 minutes après exposition. À 3 heures, avec le cuivre, il y a une réduction de 99.79% et de 99.87% du logarithme des spores germinantes de *C*. *difficile* NCTC 11204 et 027 R20291 respectivement.

Casey et al. (J Hosp Infect (2009), doi:10.1016/j.jhin.2009.08.018), grâce à une étude en cross-over sur les éléments de chambres de soins médicaux aigus, ont comparé le nombre de microorganismes entre les éléments contenant du cuivre et ceux n'en contenant pas. Après 5 semaines, les éléments contenant du cuivre et ceux n'en contenant pas ont été échangés (prélèvements réalisés une fois par semaine à deux heures différentes : 7 et 17h). Les valeurs médianes du nombre de microorganismes hébergés sur les éléments cuivrés sont entre 50% et 100% inférieures aux valeurs médianes observées dans le groupe témoin, ceci à 7h comme à 17h. Les différences sont significatives sauf pour une localisation.

L'étude en cross-over sur 19 chambres réalisée par Karpanen et al. (Infect. Control Hosp. Epidemiol. 2012; 33:3-9.) a porté sur 14 lieux de chambre en soins aigus. La durée de l'étude a été de 24 semaines avec 12 semaines en utilisant des produits cuivrés (plus de 58% de cuivre) puis 12 semaines sans utiliser le cuivre. Le nombre de microbes aérobies ainsi que la présence d'indicateurs de microorganismes ont été étudiés. Pour 8 éléments sur 14, les auteurs ont retrouvé significativement moins de microorganismes sur les produits cuivrés (par rapport aux produits sans cuivre). Pour les 6 autres éléments, il y a une réduction dans le sens des produits cuivrés, sans qu'elle soit significative.

Les résultats que nous avons obtenus vont dans le sens de ceux trouvés dans la littérature, avec un nombre total de colonies bactériennes plus faible pour les éléments cuivrés. Cependant, nous constatons seulement une tendance à la significativité de la baisse du nombre de bactéries (ceci dû à un manque de puissance).

Il est important de noter que le taux de cuivre présent dans l'alliage proposé est très élevé (donc comparable à celui des autres produits proposés) ; la différence se situe au niveau de l'épaisseur de la préparation (200 microns), beaucoup plus fine que pour les autres produits. Par conséquent, compte tenu de la réduction du coût de ce produit par rapport aux autres produits cuivrés, coût directement lié à la quantité totale de cuivre (et donc pas seulement au pourcentage), et du fait que la diminution des comptes de microorganismes est voisine de celle obtenue avec des quantités en cuivre plus élevées (concentrations voisines), nous pensons que le produit proposé a un réel intérêt dans la réduction du portage et de la transmission des bactéries dans les chambres de soins aigus.

Enfin, l'analyse de l'évolution temporelle du nombre total de microorganismes au sein des 6 chambres nous conduit à penser que le composé cupro-phosphoré utilisé, en diminuant le nombre de microorganismes dans les chambres concernées, permet de réduire la contamination des autres chambres non protégées.

## Revendications

1. Composition de poudre de cuivre oxydé et/ou phosphoré, préférentiellement sous forme de CuP₈, **caractérisée en ce que** ladite poudre :
- contient au moins 60% en masse de cuivre,
- ne contient pas plus de 70% en masse de grains dont le diamètre est inférieur à 45µm au maximum.

2. Composition selon la revendication 1, **caractérisée en ce que** le cuivre est oxydé à coeur.

3. Composition selon la revendication 1 ou 2 **caractérisée en ce que** le taux d'oxydation du cuivre est supérieur à 95 % en masse de cuivre oxydé vis-à-vis de la masse totale de cuivre et/ou que la quantité de phosphore est comprise entre 2 et 16%, préférentiellement 8% en masse vis-à-vis de la masse totale de poudre.

4. Composition selon l'une quelconque des revendications précédentes **caractérisée en ce que** ladite composition comprend :
- au moins un autre métal que le cuivre, préférentiellement choisi dans le groupe constitué par le magnésium, l'étain, le technétium, le rhénium, le fer, le chrome, le cobalt, le zinc, le platine, le cadmium, l'aluminium, le nickel, l'argent, le béryllium, le calcium, le strontium, préférentiellement le magnésium, et/ou
- au moins un composé inorganique non métallique tel que l'azote, l'arsenic, le soufre, le fluor, le chlore, le brome, le carbone, le silicium.

5. Procédé de fabrication d'une composition selon l'une quelconque des revendications précédentes, **caractérisé en ce que** la poudre de cuivre oxydée est obtenue directement par fractionnement ou est reconstituée à partir de plusieurs poudres aux granulométries et proportions de cuivre déterminées.

6. Procédé de fabrication d'une composition selon l'une quelconque des revendications 1 à 4, **caractérisé en ce que** le cuivre est oxydé à une température égale ou supérieure à 500°C en présence d'oxygène et/ou d'une source d'oxygène, préférentiellement en présence de magnésium ou de phosphore.

7. Utilisation d'une composition selon l'une quelconque des revendications 1 à 4 en tant que biocide, préférentiellement pour prévenir les maladies nosocomiales ou en tant qu'agent antifouling.

8. Utilisation d'une composition selon l'une quelconque des revendications 1 à 4 pour ralentir ou empêcher la bio-corrosion d'un substrat préférentiellement par le revêtement dudit substrat par ladite composition.

9. Composite **caractérisé en ce qu'**il comprend une composition de poudre selon l'une quelconque des revendications 1 à 4, un agent liant et éventuellement un catalyseur de prise.

10. Composite selon la revendication 9 **caractérisé en ce que** l'agent liant est un polymère organique préférentiellement choisi parmi le polyester, le polyuréthane, un polymère époxy, vinyle ester ou un polymère inorganique préférentiellement choisi parmi la silice, les polydiméthylsiloxanes, les polythiazyles, les polysilanes, les polygermanes, plus préférentiellement un polymère de silice tel que le verre.

11. Composite selon la revendication 9 ou 10 **caractérisée en ce que** la proportion en masse de la composition en poudre / liant est comprise de 1/2 à 2/1 respectivement, préférentiellement de 1,275 / 1 respectivement.

12. Procédé de fabrication du composite selon l'une quelconque des revendications 9 à 11 **caractérisé en ce que** la composition de poudre est mélangée à température ambiante avec le liant à l'état liquide, puis un catalyseur de prise est ajouté le cas échéant.

13. Utilisation d'un composite selon l'une quelconque des revendications 9 à 11, pour le revêtement d'un substrat ou le moulage d'un substrat.

14. Procédé de fabrication d'un revêtement de surface **caractérisé en ce que** le composite selon l'une quelconque des revendications 9 à 11 est pulvérisé, déposé ou appliqué sur la surface d'un substrat, ou que le substrat est trempé dans le composite à l'état liquide.

15. Utilisation d'un revêtement de surface susceptible d'être obtenu par le procédé selon la revendication 14 en tant que biocide, préférentiellement pour éviter la bio-corrosion par exemple sur la carène d'un bateau.

## Patentansprüche

1. Zusammensetzung aus oxidiertem und/oder phosphorhaltigem Kupferpulver, vorzugsweise in Form von CuP₈, **dadurch gekennzeichnet, dass** das Pulver:
- mindestens 60 Ma% Kupfer enthält,
- nicht mehr als 70 Ma% Granulat enthält, dessen Durchmesser kleiner als 45 µm maximal ist.

2. Zusammensetzung nach Anspruch 1, **dadurch gekennzeichnet, dass** das Kupfer kernoxidiert ist.

3. Zusammensetzung nach Anspruch 1 oder 2 **dadurch gekennzeichnet, dass** der Oxidationsgrad des Kupfers über 95 Ma% oxidierten Kupfers gegenüber der Kupfergesamtmasse beträgt und/oder dass die Phosphormenge zwischen 2 und 16 %, vorzugsweise 8 Ma%, gegenüber der Pulvergesamtmasse beträgt.

4. Zusammensetzung nach einem der vorangehenden Ansprüche, **dadurch gekennzeichnet, dass** die Zusammensetzung umfasst:
- mindestens ein anderes Metall als Kupfer, vorzugsweise ausgewählt aus der Gruppe, die von dem Magnesium, dem Zinn, dem Technetium, dem Rhenium, dem Eisen, dem Chrom, dem Kobalt, dem Zink, dem Platin, dem Cadmium, dem Aluminium, dem Nickel, dem Silber, dem Beryllium, dem Kalzium, dem Strontium, vorzugsweise dem Magnesium, gebildet ist, und/oder
- mindestens eine nichtmetallische anorganische Verbindung wie Stickstoff, Arsen, Schwefel, Fluor, Chlor, Brom, Karbon, Silizium.

5. Herstellungsverfahren einer Zusammensetzung nach einem der vorangehenden Ansprüche, **dadurch gekennzeichnet, dass** das oxidierte Kupferpulver direkt durch Zerkleinern gewonnen oder aus mehreren Pulvern mit bestimmten Granulatgrößen und Kupferanteilen rekonstituiert wird.

6. Herstellungsverfahren einer Zusammensetzung nach einem der Ansprüche 1 bis 4, **dadurch gekennzeichnet, dass** das Kupfer bei einer Temperatur von gleich oder über 500°C bei Anwesenheit von Sauerstoff und/oder einer Sauerstoffquelle, vorzugsweise bei Anwesenheit von Magnesium oder Phosphor, oxidiert wird.

7. Verwendung einer Zusammensetzung nach einem der Ansprüche 1 bis 4 als Biozid, vorzugsweise um nosokomialen Erkrankungen vorzubeugen, oder als Antifoulingmittel.

8. Verwendung einer Zusammensetzung nach einem der Ansprüche 1 bis 4, um die Biokorrosion eines Substrats vorzugsweise durch Beschichten des Substrats mit der Zusammensetzung zu verlangsamen oder verhindern.

9. Verbundmaterial, **dadurch gekennzeichnet, dass** es eine Pulverzusammensetzung nach einem der Ansprüche 1 bis 4, ein Bindemittel und eventuell einen Abbindekatalysator umfasst.

10. Verbundmaterial nach Anspruch 9, **dadurch gekennzeichnet, dass** das Bindemittel ein organisches Polymer ist, das vorzugsweise aus dem Polyester, dem Polyurethan, einem Epoxid-, Vinylesterpolymer oder einem anorganischen Polymer, vorzugsweise ausgewählt aus dem Siliziumoxid, den Polydimethylsiloxanen, den Polythiazylen, den Polysilanen, den Polygermanen, noch vorzugsweiser einem Siliziumoxidpolymer wie das Glas, ausgewählt ist.

11. Verbundmaterial nach Anspruch 9 oder 10, **dadurch gekennzeichnet, dass** das Massenverhältnis Pulverzusammensetzung / Bindemittel von jeweils 1/2 bis 2/1, vorzugsweise von jeweils 1,275/1, inklusive beträgt.

12. Herstellungsverfahren des Verbundmaterials nach einem der Ansprüche 9 bis 11, **dadurch gekennzeichnet, dass** die Pulverzusammensetzung bei Raumtemperatur mit dem Bindemittel in flüssigem Zustand gemischt wird, dann gegebenenfalls ein Abbindekatalysator hinzugefügt wird.

13. Verwendung eines Verbundmaterials nach einem der Ansprüche 9 bis 11 für die Beschichtung eines Substrats oder das Formen eines Substrats.

14. Herstellungsverfahren einer Oberflächenbeschichtung, **dadurch gekennzeichnet, dass** das Verbundmaterial nach einem der Ansprüche 9 bis 11 auf die Oberfläche eines Substrats gesprüht, aufgebracht oder aufgetragen wird oder das Substrat in das Verbundmaterial in flüssigem Zustand eingetaucht wird.

15. Verwendung einer Oberflächenbeschichtung, die anhand des Verfahrens nach Anspruch 14 herstellbar ist, als Biozid, vorzugsweise, um die Biokorrosion beispielsweise auf dem Körper eines Schiffs unterhalb der Wasserlinie zu verhindern.

## Claims

1. Composition of oxidized and/or phosphorized copper powder, preferably in the form of CuP₈, **characterized in that** said powder:
- contains at least 60% by mass of copper,
- contains not more than 70% by mass of grains the diameter of which is less than 45 µm at most.

2. Composition according to claim 1, **characterized in that** the copper is oxidized to the core.

3. Composition according to claim 1 or 2 **characterized in that** the oxidation ratio of the copper is greater than 95% by mass of oxidized copper relative to the total mass of copper and/or **in that** the amount of phosphorus is between 2% and 16%, preferably 8%, by mass relative to the total mass of powder.

4. Composition according to any one of the preceding claims **characterized in that** said composition comprises:
- at least one metal other than copper, preferably selected from the group consisting of magnesium, tin, technetium, rhenium, iron, chromium, cobalt, zinc, platinum, cadmium, aluminum, nickel, silver, beryllium, calcium, strontium, preferably magnesium, and/or
- at least one nonmetallic inorganic compound such as nitrogen, arsenic, sulfur, fluorine, chlorine, bromine, carbon, silicon.

5. Method for manufacturing a composition according to any one of the preceding claims, **characterized in that** the oxidized copper powder is obtained directly by fractionation or is reconstituted from several powders of given particle sizes and proportions of copper.

6. Method for manufacturing a composition according to any one of claims 1 to 4, **characterized in that** the copper is oxidized at a temperature equal to or greater than 500 °C in the presence of oxygen and/or a source of oxygen, preferably in the presence of magnesium or phosphorus.

7. Use of a composition according to any one of claims 1 to 4 as a biocide, preferably in order to prevent nosocomial diseases or as an antifouling agent.

8. Use of a composition according to any one of claims 1 to 4 in order to slow or prevent biocorrosion of a substrate preferably by coating said substrate with said composition.

9. Composite **characterized in that** it comprises a powder composition according to any one of claims 1 to 4, a binding agent and optionally a curing catalyst.

10. Composite according to claim 9 **characterized in that** the binding agent is an organic polymer preferably selected from polyester, polyurethane, an epoxy, vinyl ester polymer or an inorganic polymer preferably selected from silica, polydimethylsiloxanes, polythiazyls, polysilanes, polygermanes, more preferably a silica polymer such as glass.

11. Composite according to claim 9 or 10 **characterized in that** the proportion by mass of the powder composition/binder is from 1/2 to 2/1 respectively, preferably 1.275/1 respectively.

12. Method for manufacturing the composite according to any one of claims 9 to 11 **characterized in that** the powder composition is mixed at room temperature with the binder in the liquid state, then a curing catalyst is added if need be.

13. Use of a composite according to any one of claims 9 to 11, for coating a substrate or molding a substrate.

14. Method for manufacturing a surface coating **characterized in that** the composite according to any one of claims 9 to 11 is sprayed, deposited or applied on the surface of a substrate, or **in that** the substrate is dipped in the composite in the liquid state.

15. Use of a surface coating obtainable by the method according to claim 14 as a biocide, preferably in order to prevent biocorrosion, for example, on the bottom of a boat.
